# FASCICULE DE BREVET EUROPEEN

(11) **EP 2 473 970 B1**
(45) Date de publication et mention de la délivrance du brevet: **03.07.2013**
(21) Numéro de dépôt: 10742805.4
(22) Date de dépôt: 03.08.2010
(51) Int. Cl.: G06T 1/20, G06F 15/78

(54) **DISPOSITIF DE CALCUL RECONFIGURABLE SUR VOISINAGE FLEXIBLE DE PIXELS**
VORRICHTUNG ZUR NEUKONFIGURIERBAREN BERECHNUNG EINER FLEXIBLEN PIXELREGION
DEVICE FOR RECONFIGURABLY COMPUTING A FLEXIBLE PIXEL REGION

(30) Priorité: 28.08.2009 FR 0904105
(43) Date de publication de la demande: 11.07.2012
(73) Titulaire: Commissariat à l'Énergie Atomique et aux Énergies Alternatives, 75015 Paris (FR)
(72) Inventeur: DAROUICH, Medhi, F-92170 Vanves (FR); GUYETANT, Stéphane, F-92350 Le Plessis Robinson (FR); LAVENIER, Dominique, F-35830 Betton (FR)
(74) Mandataire: Collet, Alain
(86) Numéro de dépôt international: PCT/EP2010/061323
(87) Numéro de publication internationale: WO 2011/023502

(56) Documents cités:
- CARLOS CUADRADO ET AL: "Real-Time Stereo Vision Processing System in a FPGA" IEEE INDUSTRIAL ELECTRONICS, IECON 2006 - 32ND ANNUAL CONFERENCE ON, IEEE, PISCATAWAY, NJ, USA, 1 novembre 2006 (2006-11-01), pages 3455-3460, XP031077535 ISBN: 978-1-4244-0135-2
- JACOBI R P ET AL: "VoC: A Reconfigurable Matrix for Stereo Vision Processing" PARALLEL AND DISTRIBUTED PROCESSING SYMPOSIUM, 2006. IPDPS 2006. 20TH INTERNATIONAL RHODES ISLAND, GREECE 25-29 APRIL 2006, PISCATAWAY, NJ, USA,IEEE, 25 avril 2006 (2006-04-25), pages 1-6, XP010922393 ISBN: 978-1-4244-0054-6
- DAROUICH MEHDI, GUYETANT STEPHANE, LAVENIER DOMINIQUE: "Architecture flexible pour la stéréovision embarquée" HAL 10 octobre 2008 (2008-10-10), XP002574154 Extrait de l'Internet: URL:http://hal.inria.fr/docs/00/32/94/60/P DF/poster_GDR_darouich.pdf [extrait le 2010-03-18]
- SUNGHWAN LEE ET AL: "Real-Time Stereo Vision on a Reconfigurable System" 1 juillet 2005 (2005-07-01), EMBEDDED COMPUTER SYSTEMS: ARCHITECTURES, MODELING, AND SIMULATION; [LECTURE NOTES IN COMPUTER SCIENCE;;LNCS], SPRINGER-VERLAG, BERLIN/HEIDELBERG, PAGE(S) 299 - 307 , XP019012222 ISBN: 9783540269694 * abrégé sections 2 et 4

## Description

La présente invention concerne un dispositif de calcul reconfigurable sur voisinage de pixels. Elle s'applique notamment au domaine du traitement d'images, et plus particulièrement au domaine des solutions matérielles embarquées pour le traitement d'images.

Il existe un nombre toujours croissant de systèmes nécessitant des solutions embarquées de traitement d'images. Par exemple, des solutions embarquées de stéréovision sont nécessaires dans les robots industriels ou domestiques, dans des dispositifs d'aide à la conduite voire de conduite automatisée de véhicules tels que des drones ou des automobiles, dans des dispositifs de type prothèses de vision, voire dans des dispositifs d'usage courant tels que des téléphones portables. La stéréovision consiste en l'estimation de la profondeur des points formant une scène, habituellement transcrite via deux images captées par deux capteurs disposés l'un par rapport à l'autre d'une manière adéquate, et formant une paire stéréoscopique. Il existe une pluralité d'algorithmes de stéréovision, la plupart se basant sur l'intensité des pixels constituant les images à traiter. Tous ces algorithmes se basent sur la mise en correspondance de voisinages de pixels, dans le but de déterminer la disparité des pixels constituant une image par rapport aux pixels de l'autre image. Pour une image de référence donnée, l'ensemble des disparités est ainsi déterminé par un appariement de chacun des pixels la constituant, avec les pixels de la seconde image ; il en résulte une image habituellement désignée "carte de disparité".

Ainsi, une première étape de la mise en correspondance de voisinages de pixels consiste habituellement à déterminer des scores d'appariement, représentatifs du degré de similarité entre pixels. Une seconde étape consiste alors à analyser les scores d'appariement dans le but d'effectuer un choix de la paire de pixels procurant la bonne disparité, pouvant être basé sur des informations locales, semi-globales, par exemple sur une ligne de l'image, ou globales, c'est-à-dire sur l'intégralité de l'image, et pouvant être associé à un filtrage visant à éliminer des disparités erronées.

Parmi les algorithmes, parfois désignés "métriques", connus de l'état de la technique, il est possible de citer :
- la somme des écarts absolus, communément désignée par l'acronyme "SAD", de l'expression anglo-saxonne "Sum of Absolute Differences". Cette métrique est la plus simple à mettre en oeuvre, et partant est l'une des plus utilisées ; elle se base sur des scores d'appariement calculés en fonction de la somme des différences absolues entre les intensités des pixels,
- la somme des écarts au carré, communément désignée par le sigle "SSD", de l'expression anglo-saxonne "Sum of Squared Differences". Cette métrique est proche de la métrique SAD précitée, mais se fonde, plutôt que sur des valeurs absolues de différences, sur des carrés des valeurs de différences. La métrique SSD a pour effet d'accroître les écarts, mais aussi d'augmenter la dynamique des scores d'appariement. En revanche, elle présente l'inconvénient d'une plus grande complexité des calculs à mettre en oeuvre,
- la corrélation croisée normalisée, communément désignée par le sigle "NCC", de l'expression anglo-saxonne "Normalized Cross-Correlation". Cette métrique a pour avantage d'être insensible aux différences de gain entre les images traitées, contrairement aux deux métriques SAD et SSD précitées. La NCC a pour inconvénient de requérir des calculs complexes, recourant à des opérations de multiplication, de racine carrée et de division, et présente en outre, à l'instar des métriques SAD et SSD, une sensibilité aux biais entre les images à traiter,
- les métriques désignées par les sigles ZSAD, ZSSD et ZNCC, respectivement dérivées des métriques SAD, SSD et NCC précitées. Ces métriques ont l'avantage d'une insensibilité aux différences de gain en ce qui concerne les métriques ZSAD et ZSSD, et d'une insensibilité aux différences de gain et aux biais, en ce qui concerne la ZNCC. Cependant ces métriques présentent l'inconvénient de nécessiter des ressources calculatoires sensiblement plus contraignantes,
- la métrique désignée par le terme "Census". La méthode Census est une méthode de calcul de scores d'appariement consistant dans un premier temps à créer un vecteur de recensement dont les composantes résultent de la comparaison entre chaque pixel de voisinage et le pixel central de la fenêtre de voisinage, et dans un deuxième temps, à générer le score d'appariement en calculant la distance de Hamming entre les vecteurs recensement de chaque fenêtre de voisinage. Cette métrique présente l'inconvénient d'être très coûteuse en termes de ressources calculatoires.

Les différents algorithmes existants de mise en correspondance de voisinages de pixels sont plus ou moins bien adaptés à des applications particulières. Voire, une même application peut requérir le recours à différents algorithmes pour produire des résultats efficaces dans différentes situations. Par exemple, dans le cadre d'une application de stéréovision dans un véhicule automobile, un algorithme donné peut être plus ou moins adapté selon que le véhicule circule sur une voie d'autoroute ou bien s'il circule dans une zone urbaine ; ou encore, si le véhicule circule de nuit ou de jour, dans une zone à faible ou à fort trafic, etc. Egalement, certaines applications ou certaines configurations dans le cadre d'une même application, peuvent requérir que des filtres soient par exemple appliqués aux images, auparavant de la mise en correspondance.

Des solutions matérielles mettant en oeuvre des algorithmes existants sont connues de l'état de la technique. L'article "Real-time stereo vision processing system in a FPGA" par Cuadrado et al., IECON, 2006, en est un exemple. La plupart des solutions matérielles sont dédiées, et mettent en oeuvre une chaîne algorithmique donnée en fonction des contraintes imposées par l'application à laquelle elles sont rattachées. Les scores d'appariement peuvent être calculés selon une métrique fixe, sur un ou plusieurs voisinages fixes, et le choix de la disparité peut s'effectuer selon une méthode suivie ou non par un filtrage des erreurs. Un inconvénient des solutions matérielles existantes est qu'elles offrent une flexibilité limitée, voire inexistante, en ce qui concerne la métrique utilisée, et/ou la nature et les dimensions du voisinage pris en compte dans les algorithmes. Il peut être souhaitable, dans certaines applications, de disposer d'une architecture permettant une plus grande flexibilité, et des possibilités de reconfiguration, par un opérateur ou bien de manière automatique, de la métrique utilisée et du voisinage.

Il existe des solutions matérielles permettant une certaine flexibilité, mais cette dernière est obtenue au prix d'architectures matérielles surdimensionnées, utilisant des moyens de calcul perfectionnés s'appuyant sur des microprocesseurs puissants et des mémoires volumineuses. De telles architectures sont alors habituellement sous-exploitées dans le cadre d'applications spécifiques, et ne sont pas compatibles avec des applications embarquées nécessitant des architectures matérielles de faibles dimensions et de sobre consommation à l'usage.

Un but de la présente invention est de pallier les inconvénients précités, en proposant un dispositif dont l'architecture matérielle permet une grande flexibilité, tout en respectant les contraintes de faible consommation et de vitesse de calcul liées à des applications embarquées temps réel.

Un avantage de l'invention est qu'elle permet également la mise en oeuvre d'un grand nombre d'algorithmes de traitement d'images existants, sur la base d'une unique structure matérielle. Il est ainsi possible de réduire des coûts de fabrication, en destinant une même architecture à une grande diversité d'applications.

A cet effet, l'invention a pour objet un dispositif de calcul reconfigurable pour traitement d'images, caractérisé en ce qu'il comprend :
- au moins une matrice de calcul sur voisinage, générant des sous-scores d'appariement entre des paires de pixels résultant d'une première série d'opérations configurables via des données contenues dans un registre de configuration,
- au moins un arbre de réduction flexible, réalisant sur les sous-scores une deuxième série d'opérations configurables via le registre de configuration, sur des voisinages de pixels configurables via le registre de configuration,
- au moins une matrice d'analyse, réalisant des calculs de scores configurables via le registre de configuration sur les résultats issus de l'arbre de réduction flexible.

Dans un mode de réalisation de l'invention, le dispositif de calcul reconfigurable est caractérisé en ce que la matrice de calcul sur voisinage communique avec au moins deux mémoires, une première mémoire contenant les informations relatives à des pixels d'une première image l₁ et une seconde mémoire contenant les informations relatives à des pixels d'une seconde image l₂.

Dans un mode de réalisation de l'invention, le dispositif de calcul reconfigurable est caractérisé en ce qu'il comprend une troisième mémoire apte à stocker des informations communes à une pluralité de pixels d'une des images et communiquant avec la matrice de calcul sur voisinage.

Dans un mode de réalisation de l'invention, le dispositif de calcul reconfigurable est caractérisé en ce qu'une quatrième mémoire est apte à stocker des données intermédiaires exploitées par la matrice d'analyse.

Dans un mode de réalisation de l'invention, le dispositif de calcul reconfigurable est caractérisé en ce que les données de sortie de la matrice d'analyse sont aptes à être communiquées à un dispositif externe via un bus de données.

Dans un mode de réalisation de l'invention, le dispositif de calcul reconfigurable est caractérisé en ce que les données de sortie de la matrice d'analyse sont aptes à être réintroduites en entrée de la matrice d'analyse.

Dans un mode de réalisation de l'invention, le dispositif de calcul reconfigurable est caractérisé en ce que la matrice de calcul sur voisinage comprend une pluralité M de colonnes, chaque colonne comprenant une pluralité N d'éléments de calcul sur voisinage, chaque élément de calcul sur voisinage effectuant sur les informations relatives à une paire de pixels issus des deux images I₁, I₂ respectives, des opérations configurables via le registre de configuration produisant un sous-score d'appariement.

Dans un mode de réalisation de l'invention, le dispositif de calcul reconfigurable est caractérisé en ce que chaque élément de calcul sur voisinage comprend deux registres de données r0, r1 stockant les données intermédiaires en cours de traitement.

Dans un mode de réalisation de l'invention, le dispositif de calcul reconfigurable est caractérisé en ce que chaque élément de calcul sur voisinage comprend une unité arithmétique et logique à deux entrées déterminées par un bloc logique de sélection sélectionnant via le registre de configuration deux données parmi les données contenues dans les deux registres de données r0, r1, la valeur résultant des calculs opérés au cycle d'horloge précédent par l'élément de calcul sur voisinage de même rang de la colonne suivante, et la valeur résultant des calculs opérés au cycle d'horloge précédent par l'élément de calcul sur voisinage de même rang de la colonne précédente.

Dans un mode de réalisation de l'invention, le dispositif de calcul reconfigurable est caractérisé en ce qu'à chaque cycle d'horloge, les données comprises dans le premier registre de données r0 et le second registre de données r1 d'un élément de calcul sur voisinage d'une colonne donnée, peuvent se déplacer respectivement dans le premier registre de données r0 et le second registre de données r1 de l'élément de calcul sur voisinage du même rang donné, dans une colonne précédant ou suivant ladite colonne donnée d'un premier pas entier configurable via le registre de configuration d'une valeur maximale déterminée ou dans le premier registre de données r0 et le second registre de données r1 de l'élément de calcul sur voisinage de rang supérieur ou inférieur audit rang donné d'un second pas entier configurable via le registre de configuration d'une valeur maximale déterminée.

Dans un mode de réalisation de l'invention, le dispositif de calcul reconfigurable est caractérisé en ce que chaque colonne est associée à un registre de colonne R_{coln} contenant des données communes à tous les éléments de calcul sur voisinage de la colonne.

Dans un mode de réalisation de l'invention, le dispositif de calcul reconfigurable est caractérisé en ce que le bloc logique de sélection est en outre apte à sélectionner la donnée comprise dans le registre de colonne R_{coln}.

Dans un mode de réalisation de l'invention, le dispositif de calcul reconfigurable est caractérisé en ce que l'unité arithmétique et logique comprend au moins un premier niveau d'opérateurs arithmétiques à deux entrées et une sortie, un deuxième niveau d'opérateurs à une entrée et une sortie et un troisième niveau d'opérateurs à une entrée et une sortie, les données appliquées aux entrées des opérateurs compris dans les deuxième et troisième niveaux étant sélectionnées par des multiplexeurs parmi les sorties respectivement des opérateurs des premier niveau et deuxième niveau via le registre de configuration, les données appliquées aux deux entrées des opérateurs dudit premier niveau étant les deux données a, b d'entrée de l'unité logique et arithmétique.

Dans un mode de réalisation de l'invention, le dispositif de calcul reconfigurable est caractérisé en ce que chacun des opérateurs arithmétiques dudit premier niveau d'opérateurs est un multiplieur, un additionneur, un soustracteur et/ou un diviseur.

Dans un mode de réalisation de l'invention, le dispositif de calcul reconfigurable est caractérisé en ce que chacun des opérateurs arithmétiques dudit premier niveau d'opérateurs est un multiplieur, un additionneur, un soustracteur, un diviseur et/ou un opérateur de recensement comprenant un opérateur de comparaison comparant les deux entrées de l'opérateur, dont la sortie booléenne attaque un registre de recensement, le registre de recensement et la sortie de l'opérateur de comparaison attaquant les entrées d'un opérateur de calcul logique de recensement, les configurations du registre de recensement, de l'opérateur de comparaison et de l'opérateur de calcul logique de recensement étant spécifiées par un mot de configuration contenu dans le registre de configuration.

Dans un mode de réalisation de l'invention, le dispositif de calcul reconfigurable est caractérisé en ce que l'unité arithmétique et logique comprend en outre un premier registre apte à stocker la valeur de la première entrée a à un cycle d'horloge donné, un premier multiplexeur permettant la sélection de la première entrée ou de la valeur stockée dans le premier registre pour attaquer une entrée de chacun des opérateurs arithmétiques dudit premier niveau d'opérateurs.

Dans un mode de réalisation de l'invention, le dispositif de calcul reconfigurable est caractérisé en ce que l'unité arithmétique et logique comprend en outre un deuxième registre en sortie de l'élément de calcul sur voisinage apte à valider ou invalider le résultat obtenu à un cycle d'horloge donné, en fonction d'un bit de configuration présent dans le registre de configuration.

Dans un mode de réalisation de l'invention, le dispositif de calcul reconfigurable est caractérisé en ce que l'arbre de réduction flexible comprend un premier étage de réseaux de réduction flexible et un second étage de réseaux de réduction flexible, le premier étage comprenant M réseaux de réduction flexible à N entrées et un nombre K de sorties et le second étage comprenant K réseaux de réduction flexible à M entrées et un nombre F de sorties, K correspondant au nombre maximal de fenêtres simultanées sur une colonne et F au nombre maximal de fenêtres simultanées sur une ligne.

Dans un mode de réalisation de l'invention, chaque réseau de réduction flexible comprend une pluralité d'étages de blocs additionneurs, les entrées des blocs additionneurs du premier étage étant les entrées du réseau de réduction flexible, et les entrées des blocs additionneurs d'un étage consécutif étant attaquées par les sorties des blocs additionneurs de l'étage précédent.

Dans un mode de réalisation de l'invention, le nombre d'étages de blocs additionneurs est égal à trois, et chaque bloc additionneur possède trois entrées.

Dans un mode de réalisation de l'invention, des entrées des blocs additionneurs peuvent être inhibées, la sélection des entrées inhibées étant réalisée via le registre de configuration.

Dans un mode de réalisation de l'invention, le dispositif de calcul reconfigurable est caractérisé en ce que la matrice d'analyse comprend une pluralité L de colonnes, chaque colonne comprenant une pluralité W de modules de calcul configurables à deux entrées c, d et deux sorties e, f aptes à réaliser des opérations arithmétiques et/ou combinatoires spécifiées via le registre de configuration, les entrées des modules de calcul configurables de la première colonne étant attaquées par les sorties de l'arbre de réduction flexible après redirection via un réseau d'interconnexion flexible disposé en amont de la première colonne, la redirection étant spécifiée via le registre de configuration, et les résultats issus des opérations réalisées par les modules de calcul configurables d'une colonne donnée étant appliqués aux entrées des modules de calcul configurables de la colonne consécutive, après redirection via un réseau d'interconnexion flexible disposé en amont de la première colonne, la redirection étant spécifiée via le registre de configuration.

Dans un mode de réalisation de l'invention, chaque module de calcul configurable comprend au moins un opérateur de calcul à deux entrées et une sortie, configurable via le registre de configuration, un troisième registre stockant une valeur déterminée spécifiée via le registre de configuration, un registre de rebouclage apte à réinjecter un résultat issu de l'opérateur de calcul à une de ses entrées, un quatrième registre et un cinquième registre aptes à valider ou invalider les résultats générés par le module de calcul reconfigurable en fonction des valeurs d'entrée c, d, de sortie de l'opérateur de calcul et/ou du registre de configuration.

Dans un mode de réalisation de l'invention, l'opérateur de calcul reçoit en sa première entrée une valeur choisie par un cinquième multiplexeur via le registre de configuration entre la première valeur d'entrée c du module de calcul configurable et la valeur stockée dans le registre de rebouclage, et en sa seconde entrée une valeur choisie par un sixième multiplexeur via le registre de configuration entre la seconde valeur d'entrée d du module de calcul configurable et la valeur stockée dans le troisième registre.

Dans un mode de réalisation de l'invention, un septième multiplexeur permet la sélection des entrées des quatrième et cinquième registres via le registre de configuration, parmi la sortie dudit cinquième multiplexeur, dudit sixième multiplexeur et de la sortie dudit opérateur de calcul.

Dans un mode de réalisation de l'invention, chaque module de calcul configurable comprend en outre un bloc logique de configuration générant en place du registre de configuration, les mots logiques de configuration des éléments constituant le module de calcul configurable, sur la base du registre de configuration, des deux valeurs d'entrée c et d du module de calcul configurable et de la valeur de sortie de l'opérateur de calcul.

L'invention a également pour objet un circuit intégré mettant en oeuvre un dispositif de calcul reconfigurable selon l'un des modes de réalisation décrits.

L'invention a également pour objet un circuit intégré mettant en oeuvre une pluralité de dispositifs de calcul reconfigurables selon l'un des modes de réalisation décrits, montés en parallèle.

D'autres caractéristiques et avantages de l'invention apparaîtront à la lecture de la description, donnée à titre d'exemple, faite en regard des dessins annexés qui représentent :
- la figure 1, en synoptique, un schéma illustrant l'architecture générale d'un dispositif de calcul selon un exemple de mode de réalisation de l'invention ;
- la figure 2, un schéma illustrant l'architecture d'une matrice de calcul sur voisinage, dans un dispositif de calcul selon un exemple de mode de réalisation de l'invention ;
- les figure 3a, 3b et 3c, respectivement un schéma illustrant l'architecture d'un élément de calcul sur voisinage de la matrice de calcul sur voisinage, un schéma illustrant une unité arithmétique et logique constituant un sous-ensemble de l'élément de calcul sur voisinage, et un schéma illustrant un opérateur intégré dans ladite unité arithmétique et logique ;
- les figures 4a et 4b, respectivement un schéma illustrant l'architecture d'un réseau de réduction flexible et l'architecture d'un arbre de réduction flexible formé par une pluralité de réseaux de réduction flexibles, selon un exemple de mode de réalisation de l'invention ;
- la figure 5, un schéma illustrant un arbre de réduction flexible dont les entrées sont reliées à une pluralité de matrices de calcul sur voisinage, dans un exemple de mode de réalisation de l'invention ;
- la figure 6, un schéma illustrant l'architecture d'une matrice d'analyse, dans un exemple de mode de réalisation de l'invention ;
- la figure 7, un schéma illustrant l'architecture d'un module de calcul configurable formant un sous-ensemble de la matrice d'analyse, dans un exemple de mode de réalisation de l'invention ;
- la figure 8, un schéma illustrant l'architecture d'un réseau de réduction flexible, dans un premier exemple d'application d'un dispositif selon l'invention ;
- la figure 9, un schéma illustrant l'architecture de la matrice d'analyse, dans le premier exemple d'application d'un dispositif selon l'invention ;
- la figure 10, un schéma illustrant l'architecture d'un réseau de réduction flexible, dans un second exemple d'application d'un dispositif selon l'invention ;
- la figure 11, un schéma illustrant l'architecture de la matrice d'analyse, dans le second exemple d'application d'un dispositif selon l'invention.

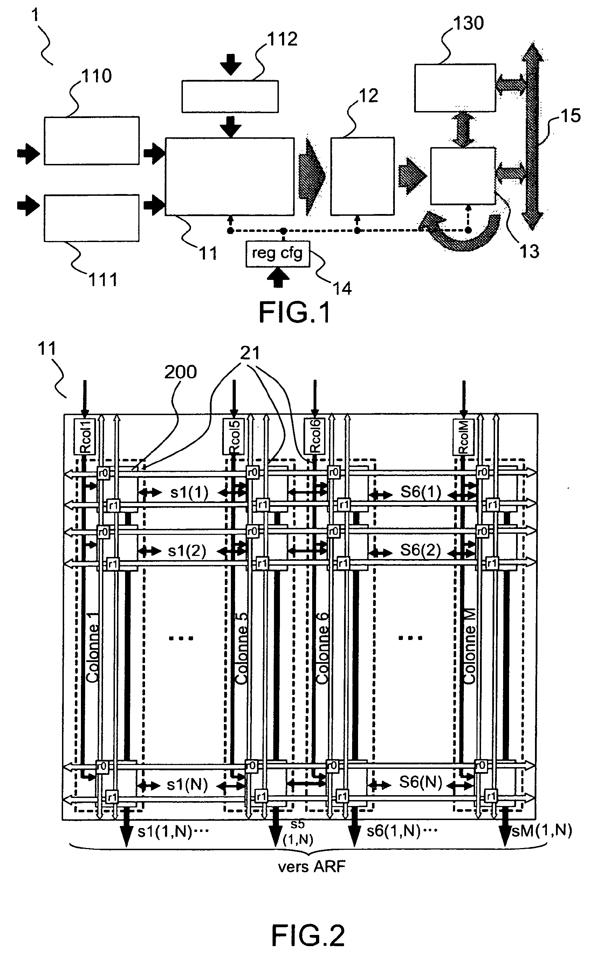

La figure 1 présente, en synoptique, un schéma illustrant l'architecture générale d'un dispositif de calcul selon un exemple de mode de réalisation de l'invention.

Un dispositif de calcul 1 peut comprendre une matrice de calcul sur voisinage 11 communiquant avec une première mémoire 110, une deuxième mémoire 111 et avantageusement une troisième mémoire 112. La matrice de calcul sur voisinage 11 fournit en sortie des données à un arbre de réduction flexible 12. Les données de sortie de l'arbre de réduction flexible 12 sont fournies à une matrice d'analyse 13, pouvant communiquer avec une quatrième mémoire 130. Un registre de configuration 14 peut être consulté par la matrice de calcul sur voisinage 11, l'arbre de réduction flexible 12 et la matrice d'analyse 13. Les mémoires 110, 111, 112, 130 peuvent échanger des données via un bus de données 15, pouvant également échanger des données avec la matrice d'analyse 13. Les mémoires 110, 111, 112 alimentant la matrice de calcul sur voisinage 11 peuvent contenir les données à traiter, par exemple les données relatives aux pixels d'images à traiter. Notamment, la première mémoire 110 peut contenir les données relatives à une première image I₁, et la deuxième mémoire 111, les données relatives à une seconde image I₂. La troisième mémoire 112 peut par exemple être utilisée pour le stockage d'informations communes aux pixels d'un voisinage, par exemple les informations relatives à des pixels remarquables d'un voisinage pour l'application de métriques spécifiques. La quatrième mémoire 130 peut par exemple être utilisée pour le stockage de données intermédiaires exploitées dans le cadre de l'analyse effectuée par la matrice d'analyse 13.

Les mémoires 110, 111 peuvent contenir l'intégralité des pixels des images I₁ et I₂ ; cependant, elles peuvent également ne contenir qu'une partie des pixels des images I₁ et I₂, et être chargées successivement de différentes parties, afin de couvrir l'intégralité des pixels ; ainsi la surface de mise en oeuvre du dispositif sur une puce de silicium peut être avantageusement réduite.

Les données fournies en sortie de la matrice de calcul sur voisinage 11 sont des sous-scores d'appariement liés à des couples de pixels des deux images à analyser. L'arbre de réduction flexible 12 combine ces sous-scores de manière à définir les voisinages de pixels utiles à l'analyse. La matrice d'analyse 13 exploite les données de sortie de l'arbre de réduction flexible 12 et leur applique des traitements appropriés, par exemple des tris, en fonction des méthodes employées. Les données de sortie de la matrice d'analyse 13 peuvent alors être communiquées par le bus de données 15, pour être exploitées par un système de plus haut-niveau. Avantageusement, les données de sortie de la matrice d'analyse 13 peuvent également être réintroduites en entrée de celle-ci.

La figure 2 présente un schéma illustrant l'architecture de la matrice de calcul sur voisinage 11, dans un dispositif de calcul selon un exemple de mode de réalisation de l'invention.

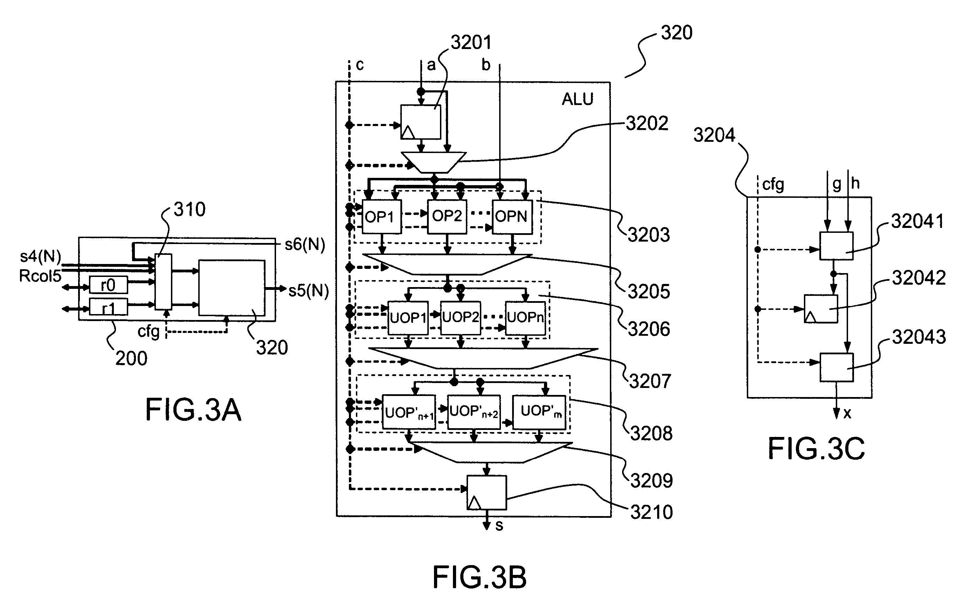

La matrice de calcul sur voisinage 11 peut comprendre M colonnes 21, comprenant chacune N éléments de calcul sur voisinage 200, c'est-à-dire que le nombre total d'éléments de calcul sur voisinage 200 est égal à NxM. Une description détaillée d'un élément de calcul sur voisinage 200 est fournie ci-après en référence aux figures 3a et 3b. Chaque colonne n 21 peut être associée à un registre de colonne Rcolₙ. Le registre de colonne Rcolₙ peut être alimenté par des mémoires ou un dispositif externe. A chaque élément de calcul sur voisinage 200 sont associés deux registres de données r0 et r1, permettant notamment le stockage des données en cours de traitement. Avantageusement, à chaque cycle d'horloge, les données peuvent se déplacer latéralement au sein de la matrice de calcul sur voisinage 11, dans les deux directions, d'un pas configurable, d'une valeur de 1 à k, k étant un nombre entier. Ainsi, par exemple, pour le quatrième élément de calcul sur voisinage de la cinquième colonne 21 de la matrice de calcul sur voisinage 11, les données comprises dans les registres de données r0 et r1 peuvent se déplacer dans les registres de données r0 et r1 respectivement, des quatrièmes éléments de calcul sur voisinage 200 des colonnes 5-k à 5+k.

Avantageusement, à chaque cycle d'horloge, les données peuvent se déplacer verticalement au sein d'une colonne donnée de la matrice de calcul sur voisinage 11, dans les deux directions, d'un pas entier configurable.

Avantageusement également, les éléments de calcul sur voisinage 200 immédiatement voisins peuvent être mis en série de manière à combiner des opérations. Ainsi, le cinquième élément de calcul sur voisinage 200 de la cinquième colonne 21 peut recevoir le résultat calculé par le cinquième élément de calcul sur voisinage 200 de la quatrième colonne ou bien le cinquième élément de calcul sur voisinage 200 de la sixième colonne, ainsi que cela est explicité plus en détails ci-après en référence aux figures 3a et 3b.

Les figures 3a, 3b et 3c présentent respectivement un schéma illustrant l'architecture d'un élément de calcul sur voisinage 200 de la matrice de calcul sur voisinage 11, un schéma illustrant une unité arithmétique et logique constituant un sous-ensemble de l'élément de calcul sur voisinage 200, et un schéma illustrant un exemple d'un opérateur de recensement CENSUS utilisé dans l'unité arithmétique et logique.

En référence à la figure 3a, l'élément de calcul sur voisinage 200 peut comprendre, outre les deux registres de données r0 et r1, un bloc logique de sélection 310, relié aux deux registres de données r0 et r1, et à une unité logique et arithmétique, désignée ci-après par l'acronyme communément utilisé ALU 320, et dont un exemple d'architecture est décrit en détails en référence à la figure 3b. A titre d'exemple, l'élément de calcul sur voisinage 200 illustré par la figure 3a est celui de la cinquième colonne de la matrice de calcul sur voisinage, et du Nième rang dans la colonne. Le bloc logique de sélection 310 permet de sélectionner deux valeurs, parmi les valeurs énoncées ci-après :
- la valeur comprise dans le premier registre de données r0,
- la valeur comprise dans le second registre de données r1,
- la valeur comprise dans le registre de la colonne (la colonne 5 dans l'exemple illustré par la figure), c'est-à-dire la valeur Rcol₅,
- la valeur restituée par l'élément de calcul sur voisinage de la colonne précédente, et du même rang que l'élément de calcul sur voisinage 200 représenté, c'est-à-dire la valeur s4(N),
- la valeur restituée par l'élément de calcul sur voisinage de la colonne suivante, et du même rang que l'élément de calcul sur voisinage 200 représenté, c'est-à-dire la valeur s6(N).
Les deux valeurs sélectionnées par le bloc logique de sélection 310 sont introduites dans les entrées a et b de l'ALU 320. La sélection est spécifiée par un mot de configuration issu du registre de configuration 14, en référence à la figure 1. L'ALU 320 effectue des opérations sur les valeurs d'entrées a et b, la sélection des opérations effectuées est spécifiée par un mot de configuration également issu du registre de configuration 14. Le résultat des opérations réalisées s5(N) est restitué en sortie de l'ALU 320, soit en sortie de l'élément de calcul sur voisinage 200.

En référence à la figure 3b, l'ALU 320 peut comprendre une pluralité d'opérateurs. Dans l'exemple de réalisation représenté, la première entrée a peut attaquer un premier registre 3201. Le premier registre 3201 et la première entrée a peuvent attaquer un premier multiplexeur 3202. La sortie du premier multiplexeur 3202 peut attaquer une entrée de chacun d'une pluralité N d'opérateurs arithmétiques OP 1 à OP N à deux entrées. Les opérateurs arithmétiques OP 1 à OP N forment un premier niveau d'opérateurs 3203. Les opérateurs arithmétiques OP 1 à OP N peuvent par exemple être des opérateurs de multiplication, de division, d'addition ou de soustraction, mais également des opérateurs arithmétiques autres. Par exemple, un des opérateurs OP 1 à OP N peut être un opérateur de recensement CENSUS 3204, décrit en détails ci-après en référence à la figure 3c. Une entrée de chacun des opérateurs OP 1 à OP N peut également être chargée par la valeur de la seconde entrée b. Les sorties des opérateurs OP 1 à OP N attaquent un deuxième multiplexeur 3205. La sortie du deuxième multiplexeur 3205 attaque les entrées d'une pluralité n d'opérateurs unitaires UOP 1 à UOP n. Les opérateurs unitaires UOP 1 à UOP n forment un deuxième niveau d'opérateurs 3206. Un troisième multiplexeur 3207 est attaqué par les sorties des opérateurs unitaires UOP 1 à UOP n. La sortie du troisième multiplexeur 3207 attaque les entrées d'une pluralité d'opérateurs unitaires UOP' n+1 à UOP' m. Les opérateurs unitaires UOP' n+1 à UOP' m forment un troisième niveau d'opérateurs 3208. Les sorties des opérateurs unitaires UOP' n+1 à UOP' m attaquent un quatrième multiplexeur 3209. La sortie du quatrième multiplexeur 3209 charge un deuxième registre 3210, restituant la valeur de sortie de l'élément de calcul sur voisinage intégrant l'ALU 320.

En référence à la figure 3c, un opérateur de recensement CENSUS 3204 à deux entrées g et h et à une sortie x peut comprendre un opérateur de comparaison 32041, un registre CENSUS 32042 et un opérateur de calcul logique CENSUS 32043. Dans l'exemple de réalisation illustré par la figure, les entrées g et h peuvent attaquer les entrées de l'opérateur de comparaison 32041. La sortie de l'opérateur de comparaison 32041, codée sur 1 bit, peut attaquer le registre de recensement CENSUS 32042. Le registre de recensement CENSUS 32042 et la sortie de l'opérateur de comparaison 32041 peuvent attaquer les entrées de l'opérateur de calcul logique de recensement CENSUS 32043. Les configurations du registre de recensement CENSUS 32042, de l'opérateur de comparaison 32041 et de l'opérateur de calcul logique de recensement CENSUS 32043 sont spécifiées par un mot de configuration contenu dans le registre de configuration 14, en référence à la figure 1.

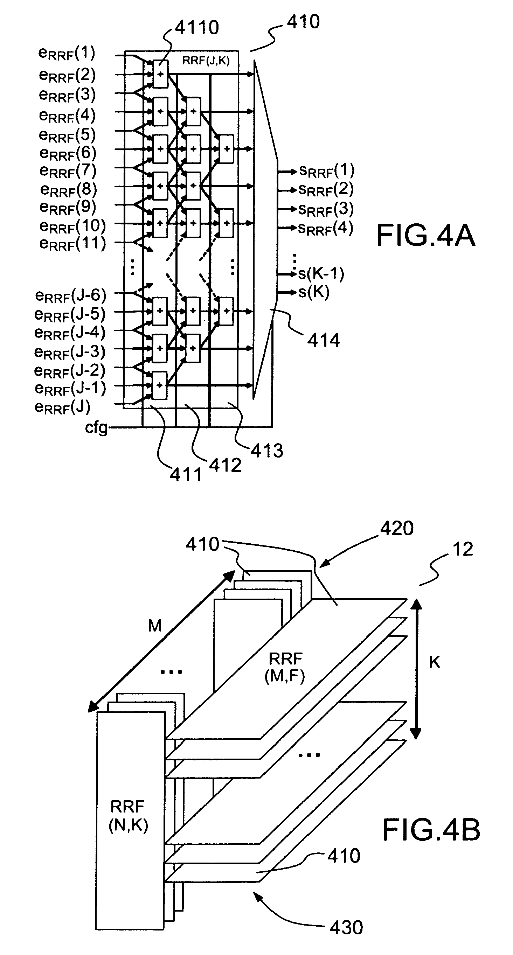

Les figures 4a et 4b présentent respectivement un schéma illustrant l'architecture d'un réseau de réduction flexible et l'architecture d'un arbre de réduction flexible formé par une pluralité de réseaux de réduction flexibles, selon un exemple de mode de réalisation de l'invention.

En référence à la figure 4a, un réseau de réduction flexible 410 comprenant J entrées e_{RRF}(1) à e_{RRF}(J) et K sorties S_{RRF}(1) à S_{RRF}(K), ci-après désigné RRF(J,K) 410, peut comprendre trois étages 411, 412, 413 de blocs additionneurs à trois entrées 4110. Le premier étage 411 comprend (J-1)/2 additionneurs 4110. Les trois premières entrées e_{RRF}(1) à e_{RRF}(3) attaquent un premier bloc additionneur 4110, la troisième entrée e_{RRF}(3) attaque également un deuxième bloc additionneur 4110, ainsi que les quatrième et cinquième entrées e_{RRF}(4) et e_{RRF}(5), et ainsi de suite, un avant-dernier bloc additionneur 4110 étant attaqué par les entrées e_{RRF}(J-4) à e_{RRF}(J-2), et un dernier bloc additionneur 4110 étant attaqué par les entrées e_{RRF}(J-2) à e_{RRF}(J). En d'autres termes, deux blocs additionneurs voisins du premier étage 411 ont une entrée en commun. Le deuxième étage 412 comprend une pluralité d'additionneurs à trois entrées, dont ces dernières sont attaquées d'une manière similaire, par les sorties des additionneurs du premier étage 411. En d'autres termes, deux blocs additionneurs voisins du deuxième étage 412 ont deux entrées qui se recoupent. Egalement, le troisième étage 413 comprend une pluralité d'additionneurs à trois entrées, dont celles-ci sont attaquées par les sorties des additionneurs du deuxième étage 412. Les sorties des additionneurs du troisième étage 413, les sorties des premiers et ultimes additionneurs du premier étage 411, ainsi que les sorties des blocs additionneurs 4110 de rang impair (le premier, le troisième, le cinquième, etc.) du deuxième étage 411, attaquent un multiplexeur RRF 414.

Chacune des entrées de chaque additionneur 4110 de chacun des trois étages 410, 411, 412, peut être invalidée, c'est-à-dire mise à zéro, par un signal de configuration issu du registre de configuration 14. Le multiplexeur RRF 414 permet la sélection d'une des K sorties du RRF, cette sélection étant spécifiée par un signal de configuration issu du registre de configuration 14.

Le réseau de réduction flexible 410 constitue la base de l'arbre de réduction flexible 12, en référence à la figure 1. La figure 4b illustre un exemple d'architecture de l'arbre de réduction flexible 12. En référence à la figure 4b, l'arbre de réduction flexible peut comprendre une première couche de RRF 420 comprenant une pluralité M de RRF 410 à N entrées et K sorties, tels qu'illustrés par la figure 4a. Chaque sortie S_{RRF}(k) d'un des M RRF 410 de la première couche de RRF 420 est reliée à une entrée d'un RRF 410 d'une seconde couche de RRF 430 comprenant une pluralité K de RRF 410 à M entrées, et un nombre F de sorties. Ainsi, le nombre total d'entrées de l'arbre de réduction flexible 12 est le nombre total d'entrées des M RRF 410 de la première couche de RRF 420, soit NxM, et le nombre total de sorties de l'arbre de réduction flexible 12 est le nombre total de sorties des K RRF 410 de la seconde couche de RRF 430, soit KxF sorties. Le nombre K correspond au nombre maximal de fenêtres simultanées sur une colonne, et le nombre F correspond au nombre maximal de fenêtres simultanées sur une ligne.

Il est avantageusement possible d'intégrer une pluralité de dispositifs de calcul 1 tels qu'illustrés par la figure 1, par exemple dans une seule puce électronique. Une telle structure peut par exemple permettre le traitement simultané de plusieurs lignes des images.

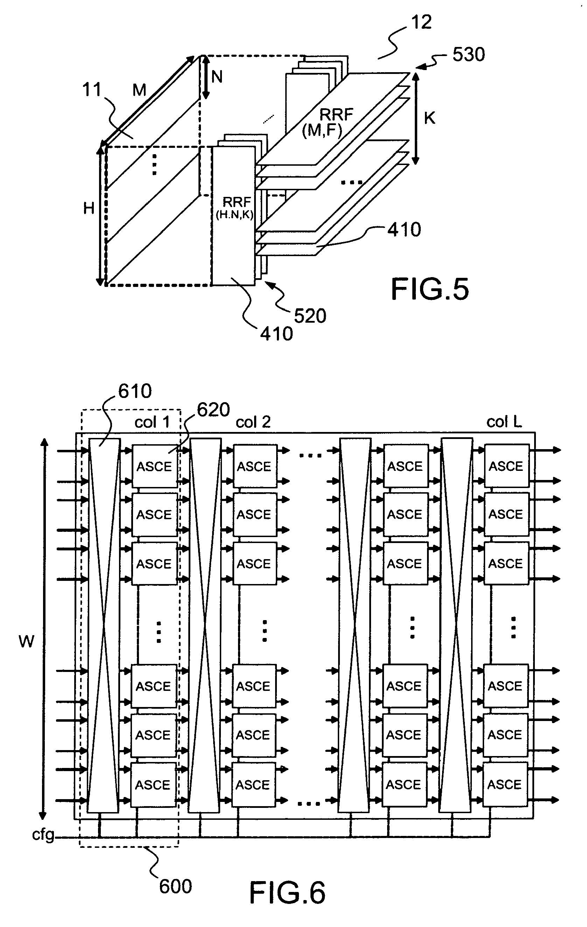

Avantageusement, une telle structure peut être réalisée d'une manière optimisée, selon l'architecture illustrée en détails par la figure 5 décrite ci-après, comprenant une pluralité H de matrices de calcul sur voisinage 11, chacune comprenant M colonnes de N éléments de calcul sur voisinage 200, en référence à la figure 2 ci-dessus.

La figure 5 présente un schéma illustrant un arbre de réduction flexible dont les entrées sont reliées à une pluralité H de matrices de calcul sur voisinage 11, dans un exemple de mode de réalisation de l'invention.

Dans l'exemple illustré par la figure 5, il est possible d'interfacer H matrices de calcul sur voisinage 11 de taille NxM, à un même arbre de réduction flexible 12 comprenant une première couche de RRF 520 d'une pluralité M de RRF 410 à HxN entrées et K sorties, les sorties des M RRF 410 de la première couche de RRF 520 attaquant les entrées de K RRF 410 à M entrées et F sorties, formant une seconde couche de RRF 530. Le nombre total d'entrées de l'arbre de réduction flexible 12 est ainsi de HxNxM, et il résulte en sortie de l'arbre de réduction flexible 12, une matrice comprenant des colonnes subdivisées en sections de taille N, possédant chacune un registre de colonne indépendant. Une telle structure peut être particulièrement avantageuse, par exemple pour le calcul simultané de plusieurs scores d'appariement selon la méthode Census, sur des fenêtres de voisinage indépendantes.

Les scores issus de l'arbre de réduction flexible 12 peuvent alors subir un traitement ultérieur, mis en oeuvre par la matrice d'analyse 13, en référence à la figure 1 ci-dessus, et décrite en détails ci-après en référence à la figure 6.

La figure 6 présente un schéma illustrant l'architecture d'une matrice d'analyse, dans un exemple de mode de réalisation de l'invention.

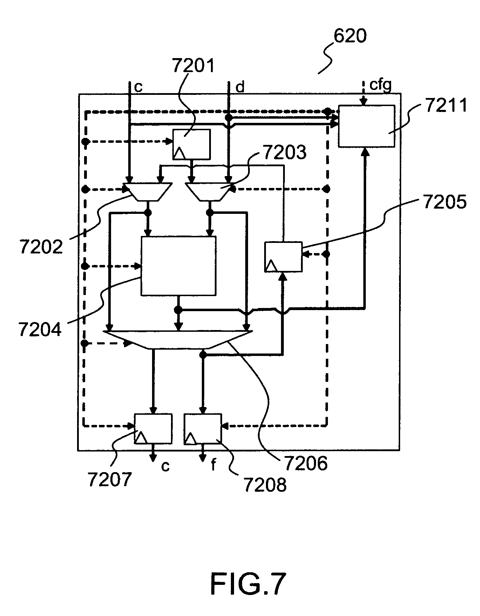

Dans l'exemple illustré par la figure 6, la matrice d'analyse 13 comporte une pluralité L de colonnes 600, chaque colonne comprenant une pluralité W de modules de calcul configurables 620, ci-après dénommés "ASCE", selon le sigle désignant les termes anglo-saxons "Add - Substract - Compare - Exchange", soit : "Addition - Soustraction - Comparaison - Permutation". Une structure détaillée d'un ASCE 620 est décrite ci-après en référence à la figure 7. Chaque ASCE 620 comprend deux entrées, et peut réaliser une ou plusieurs opération(s) spécifiée(s) par un mot de configuration issu du registre de configuration 14. Chaque ASCE 620 possède également deux sorties. Une entrée d'un ASCE 620 peut être connectée à l'une des sorties des ASCE de la colonne précédente, via un réseau d'interconnexion flexible 610 disposé en amont dans chacune des colonnes 600. L'interconnexion réalisée par chaque réseau d'interconnexion flexible 610 est spécifiée par un mot de configuration issu du registre de configuration 14. La connectivité peut être totale, c'est-à-dire que chaque entrée d'un ASCE 620 peut être connectée à toutes les sorties des ASCE de la colonne 600 précédente. Dans un mode de réalisation alternatif, la connectivité peut être partielle, c'est-à-dire que chaque entrée d'un ASCE 620 ne peut être connectée qu'à un sous-ensemble des sorties des ASCE de la colonne 600 précédente, cette restriction pouvant être définie à la conception du dispositif de calcul reconfigurable, dans le but de minimiser la surface de la puce électronique le mettant en oeuvre.

La figure 7 présente un schéma illustrant l'architecture d'un module de calcul configurable ASCE 620 formant un sous-ensemble de la matrice d'analyse 13, dans un exemple de mode de réalisation de l'invention.

Un ASCE 620 peut comprendre un troisième registre 7201, pouvant être chargé par une valeur constante spécifiée par un mot logique issu du registre de configuration 14. Avantageusement, l'ASCE 620 comprend un bloc logique de configuration 7211, générant les mots logiques de configuration des éléments constituant l'ASCE 620, sur la base du registre de configuration 14, des deux valeurs d'entrée c et d de l'ASCE 620 et de la valeur de sortie d'un opérateur de calcul ASCE 7204 décrit en détails ci-après. Le bloc logique de configuration 7211 permet de modifier la configuration de certains éléments de l'ASCE 620 en fonction des valeurs d'entrée c et/ou d, de la sortie de l'opérateur de calcul ASCE 7204 décrit en détails ci-après, et du mot de configuration contenu dans le registre de configuration 14. L'ASCE 620 peut également comprendre un cinquième multiplexeur 7202 dont une entrée reçoit la première valeur d'entrée c de l'ASCE 620 et l'autre entrée reçoit une valeur issue d'un registre de rebouclage 7205 chargé par le résultat d'un calcul réalisé au sein de l'ASCE 620, ainsi que décrit ci-après. Un sixième multiplexeur 7203 reçoit sur une de ses deux entrées, la valeur contenue dans le troisième registre 7201, et sur l'autre entrée, la seconde valeur d'entrée d de l'ASCE 620. La sélection d'une des entrées par les cinquième et sixième multiplexeurs 7202, 7203 est spécifiée par un mot logique issu du bloc logique de configuration 7211.

L'ASCE 620 comprend en outre l'opérateur de calcul ASCE 7204 comprenant deux entrées, dont une est attaquée par la sortie du cinquième multiplexeur 7202, et l'autre par la sortie du sixième multiplexeur 7203. L'opérateur de calcul ASCE 7204 peut effectuer une opération spécifiée par un mot logique issu du bloc logique de configuration 7211. Les valeurs issues des cinquième et sixième multiplexeurs 7202, 7203, ainsi que la valeur de sortie de l'opérateur de calcul ASCE 7204, attaquent l'entrée d'un septième multiplexeur 7206 à trois entrées et deux sorties, dont les valeurs qu'il doit présenter en sortie sont également spécifiées par un mot logique issu du bloc logique de configuration 7211. Les deux valeurs de sortie du septième multiplexeur 7206 chargent respectivement un quatrième et un cinquième registres 7207, 7208, la seconde sortie chargeant également le registre de rebouclage 7205. Les quatrième et cinquième registres 7207, 7208 permettent de valider ou d'invalider le résultat généré par l'ASCE 620 pour un cycle d'horloge en cours. Cette validation est spécifiée par un mot logique issu du bloc logique de configuration 7211 qui peut dépendre des valeurs des entrées c et d de l'ASCE 620, et d'un mot logique issu du registre de configuration 14 ou bien de la sortie de l'opérateur de calcul ASCE 7204. Les quatrième et cinquième registres 7207, 7208 restituent les deux sorties e et f de l'ASCE 620.

L'ASCE 620 peut par exemple permettre la réalisation des opérations suivantes, d'une manière non limitative :
- restitution en sorties e et f des valeurs maximale et minimale des deux entrées c et d,
- restitution sur la première sortie e de la valeur minimale des deux entrées c et d, et sur la seconde sortie f, du résultat de la comparaison, par exemple sous la forme d'un booléen, entre les valeurs des deux entrées c et d,
- restitution sur une sortie de la somme des deux valeurs des entrées c et d,
- restitution sur la première sortie e de la différence entre les valeurs d'entrée c et d, et sur la seconde sortie f, de la valeur maximale entre les valeurs d'entrée c et d,
- restitution sur une sortie du produit des deux valeurs des entrées c et d,
- fonction de compteur : incrémentation d'une valeur, par exemple si une valeur d'entrée booléenne est à 1,
- fonction de compteur avec sortie conditionnelle : la valeur interne du compteur est incrémentée à chaque cycle, mais la valeur présentée en sortie n'est mise à jour que si la valeur d'entrée c est à 1,
- réplication des valeurs d'entrée c et d, respectivement en sorties e et f,
- réplication des valeurs d'entrée c et d, respectivement en sorties f et e,
- restitution sur la première sortie e, de la valeur de la première entrée c, conditionnée à la valeur booléenne de la seconde entrée d, ou à défaut restitution d'une valeur constante déterminée sur la première sortie e,
- restitution d'une constante sur la seconde sortie f, conditionnée à la valeur booléenne de la seconde entrée d, ou à défaut restitution de la valeur de la première sur la seconde sortie f.

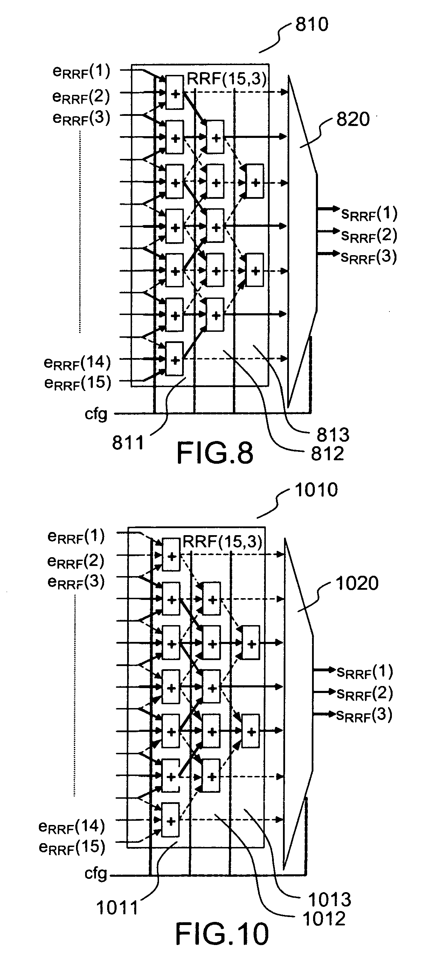

On décrit maintenant deux exemples de modes de réalisation de la présente invention basés sur une même architecture matérielle, permettant la mise en oeuvre de deux exemples d'applications, sur la base d'un dimensionnement particulier du dispositif de calcul reconfigurable sur voisinage flexible. Les exemples sont décrits en référence aux figures 8 à 11.

Bien sûr, le dimensionnement particulier commun aux deux exemples de modes de réalisation décrits n'est pas limitatif, et correspond à un dimensionnement typique, tout en ayant pour but de favoriser la bonne compréhension de la présente invention. Ce dimensionnement particulier adopte une matrice de calcul sur voisinage 11 de 15 colonnes 21 comprenant 15 éléments de calcul sur voisinage 200, en référence aux figures 1 et 2, c'est-à-dire un total de 225 éléments de calcul sur voisinage 200. Le pas maximal de déplacement des données au sein de la matrice dans toutes les directions est ici fixé à 2.

Le premier niveau d'opérateurs 3205 de l'ALU 320 de chaque élément de calcul sur voisinage 200 est dans l'exemple constitué des opérateurs addition, soustraction, multiplication et de l'opérateur de recensement CENSUS 3204, ainsi que de l'opérateur de renvoi direct des données d'entrées. Le second niveau d'opérateurs 3206 est constitué des opérateurs de valeur absolue, d'élévation au carré, de racine carrée et d'identité. Le troisième niveau d'opérateurs 3208 est constitué des opérateurs de multiplication par une constante spécifiée par un mot logique issu du registre de configuration 14, et d'identité.

L'arbre de réduction flexible 12 est composé d'un premier niveau de 15 réseaux de réduction flexible, chacun possédant 15 entrées et 3 sorties. Le second niveau est composé de 3 réseaux de réduction flexible de 15 entrées et 3 sorties. Une telle architecture permet la génération de 9 scores d'appariement par cycle. Elle permet de générer des voisinages dont les tailles peuvent aller de 2x2 à 11x11 pixels², avec un recouvrement de 3 fenêtres d'un maximum de 3 pixel en horizontal et en vertical, et un recouvrement de 2 fenêtres d'un maximum de 7 pixels en horizontal et en vertical.

La matrice d'analyse 13 comprend 5 colonnes comprenant chacune 5 ASCE 620. La connectivité entre les ASCE est totale, et chaque ASCE comprend un additionneur, un soustracteur et un multiplieur. Le signe de la sortie des opérateurs peut commander le septième multiplexeur 7206 en aval. Cela permet, par exemple, d'effectuer une opération de comparaison /permutation en utilisant le soustracteur comme une comparateur.

Dans un premier exemple d'application, le dimensionnement particulier décrit ci-dessus peut permettre la mise en correspondance pour un calcul de disparité, dans laquelle le calcul des scores d'appariement se base sur la métrique Census, et s'effectue sur un voisinage de taille 15x15 pixels², sur 2 images I₁ et I₂, l'image I₁ formant image de référence. Pour un voisinage de la première image I₁, la configuration de la matrice d'analyse 13 permet d'extraire la disparité ayant généré le meilleur score, ainsi que les 4 meilleurs scores. Ces informations peuvent alors être exploitées par une unité de calcul, par exemple un processeur, dans le but de calculer un coefficient de confiance de la disparité extraite.

Les informations relatives aux pixels du voisinage analysé dans la première image I₁ sont stockées dans la première mémoire 110, en référence à la figure 1 décrite précédemment. Les informations relatives aux pixels du voisinage analysé dans la seconde image I₂ sont stockées dans la deuxième mémoire 111. Les informations relatives aux pixels centraux des deux images I₁ et I₂ sont stockées dans la troisième mémoire 112.

Le pas de déplacement des pixels au sein de la matrice de calcul sur voisinage est fixé à 1. Les éléments de calcul sur voisinage sont configurés de manière à ce que les opérateurs de CENSUS de leur ALU respective effectue une comparaison suivie d'un "ou exclusif" et que la valeur en résultant soit choisie comme sortie de l'élément de calcul sur voisinage. La figure 8 présente un schéma illustrant l'architecture d'un réseau de réduction flexible, dans ce premier exemple d'application. Un réseau de réduction flexible 810 comprend trois étages de blocs additionneurs à trois entrées. Le premier étage d'additionneurs 811 comprend 7 additionneurs, le deuxième étage 812 comprend 5 additionneurs, et le troisième étage 813 comprend deux additionneurs. Pour la suite, d'une manière similaire à la description en référence à la figure 4 ci-dessus, les additionneurs d'un étage donné sont désignés par ordre croissant de la manière suivante : le premier additionneur du premier étage 811 est attaqué par les trois premières entrées e_{RRF}(1) à e_{RRF}(3) du réseau de réduction flexible 810, le deuxième additionneur est attaqué par les troisième à cinquième entrées e_{RRF}(3) à e_{RRF}(5), et ainsi de suite, le septième additionneur du premier étage 811 étant attaqué par l'antépénultième à la dernière entrée e_{RRF}(13) à e_{RRF}(15). Le premier additionneur du deuxième étage 812 est attaqué par les sorties des trois premiers additionneurs du premier étage 811, le deuxième additionneur du deuxième étage 812 par les sorties des deuxième, troisième et quatrième additionneurs du premier étage 811, et ainsi de suite, le cinquième additionneur du deuxième étage 812 étant attaqué par les sorties des trois derniers additionneurs du premier étage 811. Le premier additionneur du troisième étage 813 est attaqué par les sorties des trois premiers additionneurs du deuxième étage 812, et le second additionneur du troisième étage 813 est attaqué par les sorties des trois derniers additionneurs du deuxième étage 812. Différentes voies sont désactivées dans ce premier exemple d'application : la voie reliant la troisième entrée e_{RRF}(3) au premier additionneur du premier étage 811, la voie reliant la cinquième entrée e_{RRF}(5) au troisième additionneur du premier étage 811, la voie reliant la septième entrée e_{RRF}(7) au quatrième additionneur du premier étage 811, la voie reliant la neuvième entrée e_{RRF}(3) au quatrième additionneur du premier étage 811, la voie reliant la onzième entrée e_{RRF}(11) au cinquième additionneur du premier étage 811, la voie reliant la treizième entrée e_{RRF}(13) au dernier additionneur du premier étage 811, la voie reliant la sortie du deuxième additionneur du premier étage 811 au deuxième additionneur du deuxième étage 812, la voie reliant la sortie du troisième additionneur du premier étage 811 au premier additionneur du deuxième étage 812, la voie reliant la sortie du troisième additionneur du premier étage 811 au deuxième additionneur du deuxième étage 812, les voies reliant la sortie du quatrième additionneur du premier étage 811, respectivement aux deuxième et quatrième additionneurs du deuxième étage 812, la voie reliant la sortie du cinquième additionneur du premier étage 811 au quatrième additionneur du deuxième étage 812, la voie reliant la sortie du cinquième additionneur du premier étage 811 au cinquième additionneur du deuxième étage 812, la voie reliant la sortie du sixième additionneur du premier étage 811 au quatrième additionneur du deuxième étage 812, toutes les voies reliées aux entrées et aux sorties des deux additionneurs du troisième étage 813. La configuration du multiplexeur 820 branche la sortie du premier additionneur du deuxième étage 812 à la première sortie S_{RRF}(1), la sortie du troisième additionneur du deuxième étage 812 à la deuxième sortie S_{RRF}(2) et la sortie du cinquième additionneur du deuxième étage 812 à la troisième sortie S_{RRF}(3).

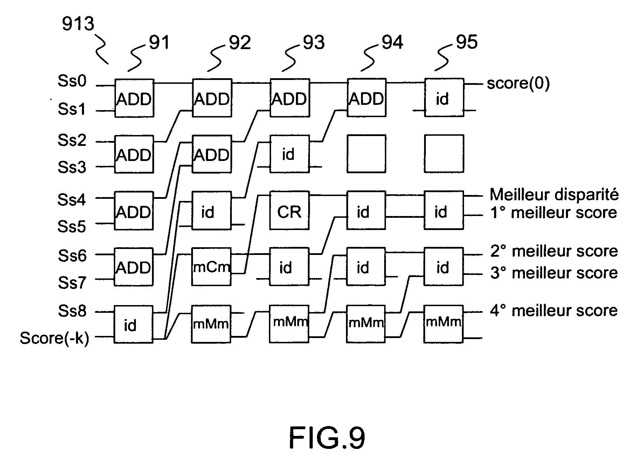

La figure 9 présente un schéma illustrant la configuration de l'architecture de la matrice d'analyse, dans ce premier exemple d'application. Une matrice d'analyse 913 comprend 5 colonnes de 5 ASCE. Pour la suite, les sous-scores générés par l'arbre de réduction flexible, respectivement sur 9 sous-fenêtres de 5x5 pixels² sans recouvrement, sont notés ss0 à ss8. Dans cet exemple, les ASCE peuvent être configurés via le mot de configuration issu du registre de configuration 14 de manière à ce que la première colonne 91 comprenne quatre additionneurs, et un opérateur identité. Le premier additionneur de la première colonne 91 reçoit en entrée les données ss0 et ss1, le deuxième additionneur de la première colonne 91 les données ss2 et ss3, le troisième additionneur de la première colonne 91 les données ss4 et ss5, le quatrième additionneur de la première colonne 91 les données ss5 et ss6. L'opérateur identité de la première colonne 91 reçoit en entrée la donnée ss9, et une donnée score(-k) réinjectée depuis la sortie de la matrice d'analyse 913.

La deuxième colonne 92 comprend :
- deux additionneurs : les deux entrées du premier additionneur étant attaquées par les sorties des deux premiers additionneurs de la première colonne 91, et les deux entrées du second additionneur étant attaquées par les sorties des troisième et quatrième additionneurs de la première colonne 91 ;
- un opérateur identité, dont la première entrée est attaquée par la première sortie de l'opérateur identité de la première colonne 91 ;
- un quatrième opérateur mCm restituant sur la première sortie e la valeur minimale des deux entrées c et d, et sur la seconde sortie f, le résultat de la comparaison entre les deux valeurs d'entrées c et d, la valeur de la seconde entrée d à un cycle d'horloge donné correspondant à la valeur de la première sortie e au cycle d'horloge précédent (le rebouclage de la seconde sortie f à la seconde entrée d est réalisé par l'intermédiaire du registre de rebouclage 7205 décrit précédemment en référence à la figure 7), l'entrée du quatrième opérateur mCm étant attaquée par la deuxième sortie de l'opérateur identité de la première colonne 91 ;
- un cinquième opérateur mMm restituant sur la première sortie la valeur minimale des deux valeurs parmi la première valeur de sortie e du cycle d'horloge précédent et la première valeur d'entrée c du cycle d'horloge courant et sur la seconde sortie la valeur maximale de ces deux valeurs, l'entrée c étant attaqué par la seconde sortie de l'opérateur identité de la première colonne 91.

La troisième colonne 93 comprend :
- un additionneur : les deux entrées de l'additionneur étant attaquées par les sorties des deux additionneurs de la deuxième colonne 92 ;
- un premier opérateur identité dont la première entrée est attaquée par la première sortie de l'opérateur identité de la deuxième colonne 92 ;
- un compteur à sortie conditionnelle, incrémenté à chaque cycle et dont la valeur en sortie est présentée conditionnellement en fonction de la valeur booléenne de la seconde sortie du quatrième opérateur mCm de la deuxième colonne 92 (si cette valeur est à `1', la valeur courante du compteur est mise en sortie, sinon elle n'est pas mise à jour),
- un second opérateur identité dont la première entrée est attaquée par la première sortie du quatrième opérateur mCm de la deuxième colonne 92 ;
- un cinquième opérateur mMm restituant sur la première sortie la valeur minimale des deux valeurs parmi la première valeur de sortie e du cycle d'horloge précédent et la première valeur d'entrée c du cycle d'horloge courant, et sur la seconde sortie la valeur maximale de ces deux valeurs, l'entrée c étant attaquée par la seconde sortie du cinquième opérateur mMm de la deuxième colonne 92.

La quatrième colonne 94 comprend :
- un additionneur : les deux entrées de l'additionneur étant attaquées par les sorties respectives de l'additionneur de la troisième colonne 93 et de la première sortie de l'opérateur identité de la troisième colonne 93 ;
- un opérateur identité dont la première entrée est attaquée par la sortie du compteur de la troisième colonne 93, et la seconde entrée par la première sortie du second opérateur identité de la troisième colonne 93 ;
- un second opérateur identité dont la première entrée est attaquée par la première sortie du cinquième opérateur mMm de la troisième colonne 93 ;
- un cinquième opérateur mMm restituant sur la première sortie la valeur minimale des deux valeurs parmi la première valeur de sortie e du cycle d'horloge précédent et la première valeur d'entrée c du cycle d'horloge courant et sur la seconde sortie la valeur maximale de ces deux valeurs, l'entrée c étant attaquée par la seconde sortie du cinquième opérateur mMm de la troisième colonne 93.

La cinquième colonne 95 comprend :
- un premier opérateur identité dont la première entrée est attaquée par la sortie de l'additionneur de la quatrième colonne 94 ;
- un deuxième opérateur identité, dont les entrées sont attaquées par les sorties du premier opérateur identité de la quatrième colonne 94 ;
- un troisième opérateur identité dont la première entrée est attaquée par la première sortie du second opérateur identité de la quatrième colonne 94, et la seconde entrée par la première sortie du cinquième opérateur mMm de la quatrième colonne 94 ;
- un opérateur mMm restituant sur la première sortie la valeur minimale des deux valeurs parmi la première valeur de sortie e du cycle d'horloge précédent et la première valeur d'entrée c du cycle d'horloge courant et sur la seconde sortie la valeur maximale de ces deux valeurs, l'entrée c étant attaqué par la seconde sortie du cinquième opérateur mMm de la quatrième colonne 94.

De la sorte, les sorties de la matrice d'analyse 913 dans le premier exemple d'application sont :
- la première sortie du premier opérateur identité de la cinquième colonne 95, qui correspond au score score(0) sur le voisinage de 15x15 pixels² résultant de la somme des neuf sous-scores ss0 à ss8 ;
- la première sortie du deuxième opérateur identité à deux entrées et deux sorties de la cinquième colonne 95, correspondant à la meilleure disparité courante ;
- la seconde sortie du deuxième opérateur identité de la cinquième colonne 95, correspondant au premier meilleur score d'appariement ;
- la première sortie du troisième opérateur identité de la cinquième colonne 95, correspondant au deuxième meilleur score d'appariement ;
- la seconde sortie du troisième opérateur identité de la cinquième colonne 95, correspondant au troisième meilleur score d'appariement ;
- la première sortie de l'opérateur mMm de la cinquième colonne 95, correspondant au quatrième meilleur score d'appariement.

La donnée du score score(0) sur le voisinage de 15x15 pixels² est stockée dans la quatrième mémoire 130, en référence à la figure 1, et est réinjectée dans la matrice d'analyse 13 k cycles d'horloges plus tard.

Pour un voisinage donné de l'image de référence I₁, on effectue la mise en correspondance avec les D voisinages de l'autre image I₂. Le traitement s'effectue en plusieurs étapes :
- les premiers registres de données r0 des éléments de calcul sur voisinage 200 sont remplis avec les informations relatives aux pixels du voisinage de référence et les seconds registres de données r1 sont remplis avec les informations relatives aux pixels du premier voisinage à tester. Les registres de colonnes R_{col} sont remplis avec les informations relatives au pixel central de la fenêtre de voisinage de référence ;
- le bloc logique de sélection 310 de chaque élément de calcul sur voisinage 200 est configuré via le registre de configuration 14, de manière à relier le premier registre de données r0 à la première entrée a de l'ALU 320, et le registre de colonne R_{col} à la seconde entrée b de l'ALU 320 ; l'opérateur de recensement CENSUS 3204 est configuré pour stocker dans son registre interne, le registre de recensement CENSUS 32042, la valeur sortant de l'opérateur de comparaison 32041 à ce cycle, le pilotage étant effectué via le registre de configuration 14. La sortie du deuxième registre 3210 est invalidée par l'intermédiaire du registre de configuration 14 ;

- les registres de colonnes R_{col} sont remplis avec les informations relatives au pixel central de la première fenêtre de voisinage à analyser ;
- les blocs logiques de sélection 310 des éléments de calcul sur voisinage 200 sont configurés via le registre de configuration 14, de manière à relier le second registre de données r1 des éléments de calcul sur voisinage 200 avec la première entrée a de l'ALU 320, et le registre de colonne R_{col} à la seconde entrée b de l'ALU 320, l'opérateur de recensement CENSUS 3204 passe en mode calcul, son registre interne 32042 ne charge plus de données. La sortie du deuxième registre 3210 est validée par l'intermédiaire du registre de configuration 14 ;
- les informations relatives à une colonne de pixels de la seconde image I₂ est chargée afin de mettre à jour le voisinage de pixels analysé. Les informations relatives au pixel central du nouveau voisinage de pixels analysé est alors chargé dans les registres de colonnes R_{col} ;
- l'étape précédente est répétée jusqu'à ce que les D voisinages de pixels consécutifs sur la ligne de la seconde image I₂ aient été testés ;
- les données de sortie de la matrice d'analyse 13 peuvent alors être exploitées, et les étapes précitées à nouveau déroulées avec le voisinage de référence suivant.

Dans un second exemple d'application, le dimensionnement particulier décrit ci-dessus peut permettre la mise en correspondance pour un calcul de disparité, dans laquelle le calcul des scores d'appariement se base sur la métrique SAD, et s'effectue sur un voisinage de cinq fenêtres de taille 5x5 pixels² avec un recouvrement de deux pixels verticalement et horizontalement, sur 2 images I₁ et I₂, l'image I₁ formant image de référence. Pour un voisinage de la première image I₁, la configuration de la matrice d'analyse 13 permet d'extraire la disparité ayant généré le meilleur score en prenant comme référence ce voisinage, cette disparité étant désignée « disparité verticale » pour la suite, ainsi que ce meilleur score, désigné « meilleur score vertical » pour la suite. Cette configuration permet aussi d'extraire la meilleure disparité en prenant la seconde image I₂ comme référence, cette disparité étant désignée « disparité diagonale » pour la suite, le score correspondant étant désigné « meilleur score diagonal » pour la suite. Ces informations peuvent alors être exploitées par une unité de calcul, par exemple un processeur, dans le but d'effectuer une vérification de la symétrie. Il est possible de se référer à la publication de Fusiello A., Roberto V., Trucco E., "Symmetric stereo with multiple windowing", Int. J. Pattern Recognition and Artificial Intelligence, vol. 14, p. 1053-1066, 2000, pour plus de détails sur la métrique faisant l'objet de ce second exemple d'application.

Les informations relatives aux pixels du voisinage analysé dans la première image I₁ sont stockées dans la première mémoire 110, en référence à la figure 1 décrite précédemment. Les informations relatives aux pixels du voisinage analysé dans la seconde image I₂ sont stockées dans la deuxième mémoire 111.

Le pas de déplacement des pixels au sein de la matrice de calcul sur voisinage est fixé à 1. Les éléments de calcul sur voisinage 200 sont configurés de manière à opérer une différence absolue entre leurs deux entrées a et b.

La figure 10 présente un schéma illustrant l'architecture d'un réseau de réduction flexible, dans ce second exemple d'application. Un réseau de réduction flexible 1010 comprend trois étages de blocs additionneurs à trois entrées. Le premier étage d'additionneurs 1011 comprend 7 additionneurs, le deuxième étage 1012 comprend 5 additionneurs, et le troisième étage 1013 comprend deux additionneurs. Le premier additionneur du premier étage 1011 est attaqué par les trois premières entrées e_{RRF}(1) à e_{RRF}(3) du réseau de réduction flexible 1010, le deuxième additionneur est attaqué par les troisième à cinquième entrées e_{RRF}(3) à e_{RRF}(5), et ainsi de suite, le septième additionneur du premier étage 1011 étant attaqué par l'antépénultième à la dernière entrée e_{RRF}(13) à e_{RRF}(15). Le premier additionneur du deuxième étage 1012 est attaqué par les sorties des trois premiers additionneurs du premier étage 1011, le deuxième additionneur du deuxième étage 1012 par les sorties des deuxième, troisième et quatrième additionneurs du premier étage 1011, et ainsi de suite, le cinquième additionneur du deuxième étage 1012 étant attaqué par les sorties des trois derniers additionneurs du premier étage 1011. Le premier additionneur du troisième étage 1013 est attaqué par les sorties des trois premiers additionneurs du deuxième étage 1012, et le second additionneur du troisième étage 1013 est attaqué par les sorties des trois derniers additionneurs du deuxième étage 1012. Différentes voies sont désactivées dans ce second exemple d'application : toutes les voies reliées aux entrées des premier et ultime additionneurs du premier étage 1011, la voie reliant la cinquième entrée e_{RRF}(5) au troisième additionneur du premier étage 1011, les voies reliant la septième entrée e_{RRF}(7) et la neuvième entrée e_{RRF}(9) au quatrième additionneur du premier étage 1011, la voie reliant la onzième entrée e_{RRF}(11) au cinquième additionneur du premier étage 1011, toutes les voies reliées aux entrées des premier et ultime additionneurs du deuxième étage 1012, la voie reliant la sortie du quatrième additionneur du premier étage 1011 au deuxième additionneur du deuxième étage 1012, la voie reliant la sortie du quatrième additionneur du premier étage 1011 au quatrième additionneur du deuxième étage 1012, la voie reliant la sortie du premier additionneur du deuxième étage 1012 au premier additionneur du troisième étage 1013, la voie reliant la sortie du troisième additionneur du deuxième étage 1012 au premier additionneur du troisième étage 1013, la voie reliant la sortie du troisième additionneur du deuxième étage 1012 au deuxième additionneur du troisième étage 1013, la voie reliant la sortie du cinquième additionneur du deuxième étage 1012 au second additionneur du troisième étage 1013. La configuration du multiplexeur 1020 branche la sortie du premier additionneur du troisième étage 1013 à la première sortie S_{RRF}(1), la sortie du troisième additionneur du deuxième étage 1012 à la deuxième sortie S_{RRF}(2) et la sortie du second additionneur du troisième étage 1013 à la troisième sortie S_{RRF}(3).

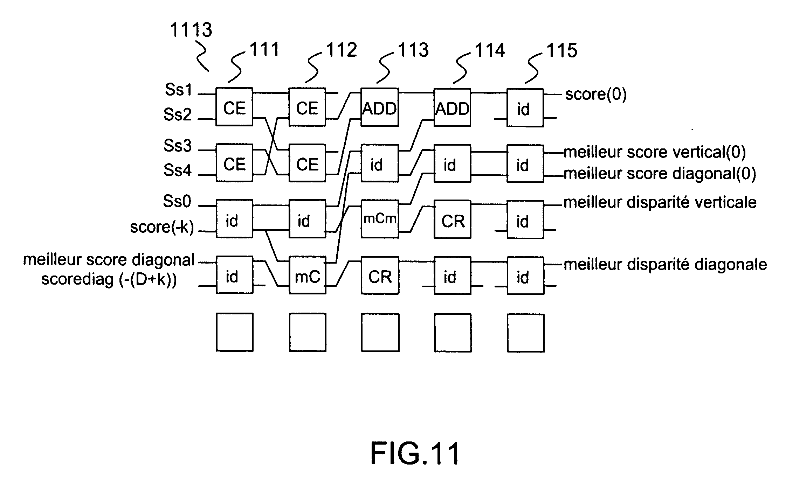

La figure 11 présente un schéma illustrant la configuration de l'architecture de la matrice d'analyse 13, dans ce second exemple d'application. Une matrice d'analyse 1113 comprend 5 colonnes de 5 ASCE 620. Pour la suite, les sous-scores générés par l'arbre de réduction flexible 12, sont respectivement le sous-score de la fenêtre centrale ss0 et les sous-scores ss1 à ss4 des 4 fenêtres périphériques. Dans cet exemple, la première colonne 111 comprend :
- un premier et un deuxième opérateurs CE dont les sorties e et f restituent respectivement la valeur maximale des deux valeurs d'entrée c et d, et la valeur minimale des deux valeurs d'entrée c et d, les entrées c et d du premier opérateur étant attaquées par les deux premiers sous-scores ss1 et ss2, et les entrées c et d du deuxième opérateur étant attaquées par les troisième et quatrième sous-scores ss3 et ss4 ;
- un premier opérateur identité dont la première entrée est attaquée par la valeur du sous-score de la fenêtre centrale ss0, et la seconde entrée par un score score(-k) réinjecté depuis une sortie de la matrice d'analyse 1113 ;
- un second opérateur identité dont la première entrée est attaquée par un score de disparité diagonale scorediag(-(D+k)) réinjecté depuis une sortie de la matrice d'analyse 1113.

La deuxième colonne 112 comprend :
- un premier et un deuxième opérateurs CE dont les sorties e et f restituent respectivement la valeur maximale des deux valeurs d'entrée c et d, et la valeur minimale des deux valeurs d'entrée c et d, la première entrée c du premier opérateur CE étant attaquée par la première sortie du premier opérateur CE de la première colonne 111, la seconde entrée d du premier opérateur CE étant attaquée par la seconde sortie f du deuxième opérateur CE de la première colonne 111, la première entrée c du deuxième opérateur CE étant attaquée par la seconde sortie f du premier opérateur CE de la première colonne 111, et la seconde entrée d du deuxième opérateur CE étant attaquée par la première sortie e du deuxième opérateur CE de la première colonne 111 ;
- un opérateur identité dont les deux entrées sont attaquées par les deux sorties du premier opérateur identité de la première colonne 111 ;
- un opérateur mC dont la première sortie e restitue la valeur minimale des deux entrées c et d, et la seconde sortie f restitue une valeur booléenne résultant de la comparaison des deux valeurs d'entrée c et d, la première entrée étant attaquée par la deuxième sortie du premier opérateur identité de la première colonne 111, et la seconde entrée étant attaquée par la première sortie du second opérateur identité de la première colonne 111.

La troisième colonne 113 comprend :
- un additionneur, les deux entrées de l'additionneur étant attaquées par les deuxièmes sorties respectives des deux premiers opérateurs CE de la deuxième colonne 112 ;
- un opérateur identité dont la première entrée c est attaquée par la première sortie e de l'opérateur identité de la deuxième colonne 112, et la seconde entrée étant attaquée par la première sortie de l'opérateur mC de la deuxième colonne 112 ;
- un opérateur mCm restituant sur la première sortie e la valeur minimale des deux entrées c et d, et sur la seconde sortie f, le résultat de la comparaison entre les deux valeurs d'entrées c et d, la valeur de la seconde entrée d à un cycle d'horloge donné correspondant à la valeur de la première sortie e au cycle d'horloge précédent (le rebouclage de la seconde sortie f à la seconde entrée d est réalisé par l'intermédiaire du registre de rebouclage 7205 décrit précédemment en référence à la figure 7), l'entrée de l'opérateur mCm étant attaquée par la deuxième sortie de l'opérateur identité de la deuxième colonne 112 ;
- un compteur, incrémenté à chaque cycle et dont la valeur en sortie est présentée conditionnellement en fonction de la valeur booléenne de la seconde sortie de l'opérateur mC de la deuxième colonne 112 (si cette valeur est à '1', la valeur courante du compteur est mise en sortie, sinon elle n'est pas mise à jour) ;

La quatrième colonne 114 comprend :
- un additionneur : les deux entrées de l'additionneur étant attaquées par les premières sorties respectives de l'additionneur de la troisième colonne 113 et de l'opérateur identité de la troisième colonne 113 ;
- un premier opérateur identité dont la première entrée est attaquée par la seconde sortie de l'opérateur identité de la troisième colonne 113, et la seconde entrée par la première sortie de l'opérateur mC de la troisième colonne 113 ;
- un compteur, incrémenté à chaque cycle et dont la valeur en sortie est présentée conditionnellement en fonction de la valeur booléenne de la seconde sortie de l'opérateur mCm de la troisième colonne 113 (si cette valeur est à '1', la valeur courante du compteur est mise en sortie, sinon elle n'est pas mise à jour) ;
- un second opérateur identité dont la première entrée est attaquée par la sortie du compteur de la troisième colonne 113.

La cinquième colonne 115 comprend :
- un premier opérateur identité, dont la première entrée est attaquée par la sortie de l'additionneur de la quatrième colonne 114 ;
- un deuxième opérateur identité, dont les entrées sont attaquées par les sorties du premier opérateur identité de la quatrième colonne 114 ;
- un troisième opérateur identité, dont la première entrée est attaquée par la sortie du compteur de la quatrième colonne 114 ;
- un quatrième opérateur identité, dont la première entrée est attaquée par la première sortie du second opérateur identité de la quatrième colonne 114.

De la sorte, les sorties de la matrice d'analyse 1113 dans le second exemple d'application sont :
- la première sortie du premier opérateur identité de la cinquième colonne 115, qui correspond au score score(0), somme du score central et des deux scores périphériques les plus faibles ;
- la première sortie du deuxième opérateur identité de la cinquième colonne 115, correspondant au meilleur score vertical, c'est-à-dire le meilleur score avec le voisinage de l'image I₁ comme référence;
- la seconde sortie du deuxième opérateur identité de la cinquième colonne 115, correspondant au meilleur score diagonal, c'est-à-dire le meilleur score avec le voisinage de l'image I₂ comme référence;
- la première sortie du troisième opérateur identité de la cinquième colonne 115, correspondant à la meilleure disparité verticale ;
- la première sortie du quatrième opérateur identité de la cinquième colonne 115, correspondant à la meilleure disparité diagonale.

La donnée du score score(0) est stockée dans la quatrième mémoire 130, en référence à la figure 1, et est réinjectée dans la matrice d'analyse 13 k cycles d'horloges plus tard. La donnée du score meilleur score diagonal(0) est stockée dans la quatrième mémoire 130, en référence à la figure 1, et est réinjectée dans la matrice d'analyse 13 D+k cycles d'horloges plus tard (D étant le nombre de disparité maximum). Ce score, ainsi que le meilleur score diagonal courant, sont lus en mémoire, et permettent le calcul de la meilleure disparité courante, de la meilleure disparité diagonale courante, du meilleur score courant et du meilleur score diagonal courant. Ces données sont stockées à chaque cycle dans la quatrième mémoire 130.

Pour un voisinage donné de l'image de référence I₁, on effectue la mise en correspondance avec les D voisinages de l'autre image I₂. Le traitement s'effectue en plusieurs étapes :
- le bloc logique de sélection 310 de chaque élément de calcul sur voisinage 200 est configuré via le registre de configuration 14, de manière à relier le premier registre de données r0 à la première entrée a de l'ALU 320, et le second registre de données r1 à la seconde entrée b de l'ALU 320. La sortie du deuxième registre 3210 est invalidée par l'intermédiaire du registre de configuration 14;
- les premiers registres de données r0 sont remplis avec les informations relatives aux pixels du voisinage de référence et les seconds registres r1 sont remplis avec les informations relatives aux pixels du premier voisinage à tester ;
- la sortie du deuxième registre 3210 est validée par l'intermédiaire du registre de configuration 14 ;
- une colonne de pixels de la seconde image I₂ est chargée dans les registres r1 des éléments de la première colonne de la matrice de calcul sur voisinage, en provenance de la deuxième mémoire 111, afin de mettre à jour le voisinage analysé. Les données contenues dans les registres r1 d'une colonne sont transférées aux registres r1 de sa voisine immédiate (pas de 1) ;
- l'étape précédente est répétée jusqu'à ce que les D voisinages de pixels consécutifs sur la ligne de la seconde image I₂ aient été testés ;
- les données de sortie de la matrice d'analyse 13 peuvent alors être exploitées, et les étapes précitées à nouveau déroulées avec le voisinage de référence suivant.

Par exemple, un dispositif de calcul reconfigurable capable de générer quatre scores d'appariement par cycle d'horloge, à une fréquence de 200 MHz sur des voisinages de 15x15 pixels² peut par exemple être mis en oeuvre sur une puce électronique gravée sur du silicium. Le dispositif peut permettre le calcul de la disparité d'une paire d'images au standard VGA - selon le sigle correspondant à l'expression anglo-saxonne "Video Graphics Array", c'est-à-dire avec une résolution de 640x480 pixels² -, avec une cadence de 40 images par seconde, pour 64 niveaux de disparité, ce qui correspond à une performance de traitement de l'ordre de 0,8 Gigapixel de disparité par seconde ou 0,8 GPDS. La réalisation pratique d'un tel exemple de dispositif, avec une finesse de gravure de 65 nm en technologie de faible consommation, occupe une surface de l'ordre de 3 mm².

Il est à remarquer que le dispositif de calcul selon la présente invention peut être adapté selon les besoins, et peut être dimensionné en fonction des applications visées. Par exemple, plusieurs matrices peuvent être mises en parallèle au sein d'une même structure matérielle. Egalement, des calculs d'appariement sur des voisinages plus importants peuvent être réalisés en augmentant la taille des matrices. De la même manière, l'utilisation de mémoires de plus grandes capacités permet de traiter des paires d'images de résolutions plus importantes.

Réciproquement, l'utilisation d'un nombre réduit de matrices, ou bien de matrices de dimensions plus réduites, peut être envisagé pour des applications de basse consommation.

## Revendications

1. Dispositif de calcul reconfigurable (1) pour traitement d'images, comprenant :
• au moins une matrice de calcul sur voisinage (11) générant des sous-scores d'appariement entre des paires de pixels résultant d'une première série d'opérations configurables via des données contenues dans un registre de configuration (14), **caractérisé en ce qu'**il comprend :
• au moins un arbre de réduction flexible (12) réalisant sur les sous-scores d'appariement une deuxième série d'opérations configurables via le registre de configuration (14) sur des voisinages de pixels configurables via le registre de configuration (14),
• au moins une matrice d'analyse (13) réalisant des calculs de scores configurables via le registre de configuration (14) sur les résultats issus de l'arbre de réduction flexible (12).

2. Dispositif de calcul reconfigurable (1) selon la revendication 1, **caractérisé en ce que** la matrice de calcul sur voisinage (11) communique avec au moins deux mémoires (110, 111), une première mémoire (110) contenant les informations relatives à des pixels d'une première image (I₁) et une seconde mémoire (111) contenant les informations relatives à des pixels d'une seconde image (I₂).

3. Dispositif de calcul reconfigurable (1) selon l'une quelconque des revendications précédentes, **caractérisé en ce qu'**il comprend une troisième mémoire (112) apte à stocker des informations communes à une pluralité de pixels d'une des images et communiquant avec la matrice de calcul sur voisinage (11).

4. Dispositif de calcul reconfigurable (1) selon l'une quelconque des revendications précédentes, **caractérisé en ce qu'**une quatrième mémoire (130) est apte à stocker des données intermédiaires exploitées par la matrice d'analyse (13).

5. Dispositif de calcul reconfigurable (1) selon l'une quelconque des revendications précédentes, **caractérisé en ce que** les données de sortie de la matrice d'analyse (13) sont aptes à être communiquées à un dispositif externe via un bus de données (15).

6. Dispositif de calcul reconfigurable (1) selon l'une quelconque des revendications précédentes, **caractérisé en ce que** les données de sortie de la matrice d'analyse (13) sont aptes à être réintroduites en entrée de la matrice d'analyse (13).

7. Dispositif de calcul reconfigurable (1) selon l'une quelconque des revendications précédentes, **caractérisé en ce que** la matrice de calcul sur voisinage (11) comprend une pluralité M de colonnes (21), chaque colonne comprenant une pluralité N d'éléments de calcul sur voisinage (200), chaque élément de calcul sur voisinage (200) effectuant sur les informations relatives à une paire de pixels issus des deux images (I₁, I₂) respectives, des opérations configurables via le registre de configuration (14) produisant un sous-score d'appariement.

8. Dispositif de calcul reconfigurable (1) selon la revendication 7, **caractérisé en ce que** chaque élément de calcul sur voisinage (200) comprend deux registres de données (r0, r1) stockant les données intermédiaires en cours de traitement.

9. Dispositif de calcul reconfigurable (1) selon l'une quelconque des revendications 7 à 8, **caractérisé en ce que** chaque élément de calcul sur voisinage (200) comprend une unité arithmétique et logique (320) à deux entrées (a, b) déterminées par un bloc logique de sélection (310) sélectionnant via le registre de configuration (14) deux données parmi les données contenues dans les deux registres de données (r0, r1), la valeur résultant des calculs opérés au cycle d'horloge précédent par l'élément de calcul sur voisinage (200) de même rang de la colonne (21) suivante, et la valeur résultant des calculs opérés au cycle d'horloge précédent par l'élément de calcul sur voisinage (200) de même rang de la colonne (21) précédente.

10. Dispositif de calcul reconfigurable (1) selon l'une quelconque des revendications 7 à 9, **caractérisé en ce qu'**à chaque cycle d'horloge, les données comprises dans le premier registre de données (r0) et le second registre de données (r1) d'un élément de calcul sur voisinage (200) d'une colonne (21) donnée, peuvent se déplacer respectivement dans le premier registre de données (r0) et le second registre de données (r1) de l'élément de calcul sur voisinage du même rang donné, dans une colonne (21) précédant ou suivant ladite colonne (21) donnée d'un premier pas entier configurable via le registre de configuration (14) d'une valeur maximale déterminée, ou dans le premier registre de données (r0) et le second registre de données (r1) de l'élément de calcul sur voisinage de rang supérieur ou inférieur audit rang donné d'un second pas entier configurable via le registre de configuration (14) d'une valeur maximale déterminée.

11. Dispositif de calcul reconfigurable (1) selon l'une quelconque des revendications 7 à 10, **caractérisé en ce que** chaque colonne (21) est associée à un registre de colonne (Rcolₙ) contenant des données communes à tous les éléments de calcul sur voisinage (200) de la colonne (21).

12. Dispositif de calcul reconfigurable (1) selon la revendication 11, **caractérisé en ce que** le bloc logique de sélection (310) est en outre apte à sélectionner la donnée comprise dans le registre de colonne (Rcolₙ).

13. Dispositif de calcul reconfigurable (1) selon l'une quelconque des revendications 9 à 12, **caractérisé en ce que** l'unité arithmétique et logique (320) comprend au moins un premier niveau (3203) d'opérateurs arithmétiques à deux entrées et une sortie, un deuxième niveau (3206) d'opérateurs à une entrée et une sortie et un troisième niveau (3208) d'opérateurs à une entrée et une sortie, les données appliquées aux entrées des opérateurs compris dans les deuxième et troisième niveaux (3206, 3208) étant sélectionnées par des multiplexeurs (3205, 3207) parmi les sorties respectivement des opérateurs des premier niveau (3203) et deuxième niveau (3206) via le registre de configuration (14), les données appliquées aux deux entrées des opérateurs dudit premier niveau (3203) étant les deux données (a, b) d'entrée de l'unité logique et arithmétique (320).

14. Dispositif de calcul reconfigurable (1) selon la revendication 13, **caractérisé en ce que** chacun des opérateurs arithmétiques dudit premier niveau d'opérateurs est un multiplieur, un additionneur, un soustracteur et/ou un diviseur.

15. Dispositif de calcul reconfigurable (1) selon la revendication 13, **caractérisé en ce que** chacun des opérateurs arithmétiques dudit premier niveau d'opérateurs est un multiplieur, un additionneur, un soustracteur, un diviseur et/ou un opérateur de recensement (3204) comprenant un opérateur de comparaison (32041) comparant les deux entrées de l'opérateur, dont la sortie booléenne attaque un registre de recensement (32042), le registre de recensement (32042) et la sortie de l'opérateur de comparaison (32041) attaquant les entrées d'un opérateur de calcul logique de recensement (32043), les configurations du registre de recensement (32042), de l'opérateur de comparaison (32041) et de l'opérateur de calcul logique de recensement (32043) étant spécifiées par un mot de configuration contenu dans le registre de configuration (14).

16. Dispositif de calcul reconfigurable (1) selon l'une quelconque des revendications 13 à 15, **caractérisé en ce que** l'unité arithmétique et logique (320) comprend en outre un premier registre (3201) apte à stocker la valeur de la première entrée (a) à un cycle d'horloge donné, un premier multiplexeur (3202) permettant la sélection de la première entrée ou de la valeur stockée dans le premier registre (3201) pour attaquer une entrée de chacun des opérateurs arithmétiques dudit premier niveau d'opérateurs (3203).

17. Dispositif de calcul reconfigurable (1) selon l'une quelconque des revendications 9 à 16, **caractérisé en ce que** l'unité arithmétique et logique (320) comprend en outre un deuxième registre (3210) en sortie de l'élément de calcul sur voisinage (200) apte à valider ou invalider le résultat obtenu à un cycle d'horloge donné, en fonction d'un bit de configuration présent dans le registre de configuration (14).

18. Dispositif de calcul reconfigurable (1) selon l'une quelconque des revendications précédentes, **caractérisé en ce que** l'arbre de réduction flexible (12) comprend un premier étage (420) de réseaux de réduction flexible (410) et un second étage (430) de réseaux de réduction flexible, le premier étage comprenant M réseaux de réduction flexible (410) à N entrées et un nombre K de sorties et le second étage (430) comprenant K réseaux de réduction flexible (410) à M entrées et un nombre F de sorties, K correspondant au nombre maximal de fenêtres simultanées sur une colonne et F au nombre maximal de fenêtres simultanées sur une ligne.

19. Dispositif de calcul reconfigurable (1) selon la revendication 18, **caractérisé en ce que** chaque réseau de réduction flexible (410) comprend une pluralité d'étages (411, 412, 413) de blocs additionneurs (4110), les entrées des blocs additionneurs (4110) du premier étage (411) étant les entrées du réseau de réduction flexible (410), et les entrées des blocs additionneurs (4110) d'un étage consécutif (412) étant attaquées par les sorties des blocs additionneurs (4110) de l'étage (411) précédent.

20. Dispositif de calcul reconfigurable (1) selon la revendication 19, **caractérisé en ce que** le nombre d'étages de blocs additionneurs est égal à trois, et chaque bloc additionneur (4110) possède trois entrées.

21. Dispositif de calcul reconfigurable (1) selon l'une quelconque des revendications 18 à 20, **caractérisé en ce que** des entrées des blocs additionneurs (4110) peuvent être inhibées, la sélection des entrées inhibées étant réalisée via le registre de configuration (14).

22. Dispositif de calcul reconfigurable (1) selon l'une quelconque des revendications précédentes, **caractérisé en ce que** la matrice d'analyse (13) comprend une pluralité L de colonnes (600), chaque colonne (600) comprenant une pluralité W de modules de calcul configurables (620) à deux entrées (c, d) et deux sorties (e, f) aptes à réaliser des opérations arithmétiques et/ou combinatoires spécifiées via le registre de configuration (14), les entrées des modules de calcul configurables (620) de la première colonne (600) étant attaquées par les sorties de l'arbre de réduction flexible (12) après redirection via un réseau d'interconnexion flexible (610) disposé en amont de la première colonne (600), la redirection étant spécifiée via le registre de configuration (14), et les résultats issus des opérations réalisées par les modules de calcul configurables (620) d'une colonne (600) donnée étant appliqués aux entrées des modules de calcul configurables (620) de la colonne consécutive, après redirection via un réseau d'interconnexion flexible (610) disposé en amont de la première colonne (600), la redirection étant spécifiée via le registre de configuration (14).

23. Dispositif de calcul reconfigurable (1) selon la revendication 22, **caractérisé en ce que** chaque module de calcul configurable (620) comprend au moins un opérateur de calcul (7204) à deux entrées et une sortie, configurable via le registre de configuration (14), un troisième registre (7201) stockant une valeur déterminée spécifiée via le registre de configuration (14), un registre de rebouclage (7205) apte à réinjecter un résultat issu de l'opérateur de calcul (7204) à une de ses entrées, un quatrième registre (7207) et un cinquième registre (7208) aptes à valider ou invalider les résultats générés par le module de calcul reconfigurable (620) en fonction des valeurs d'entrée (c, d), de sortie de l'opérateur de calcul (7204) et/ou du registre de configuration (14).

24. Dispositif de calcul reconfigurable (1) selon la revendication 23, **caractérisé en ce que** l'opérateur de calcul (7204) reçoit en sa première entrée une valeur choisie par un cinquième multiplexeur (7202) via le registre de configuration (14) entre la première valeur d'entrée (c) du module de calcul configurable (620) et la valeur stockée dans le registre de rebouclage (7205), et en sa seconde entrée une valeur choisie par un sixième multiplexeur (7203) via le registre de configuration (14) entre la seconde valeur d'entrée (d) du module de calcul configurable (620) et la valeur stockée dans le troisième registre (7201).

25. Dispositif de calcul reconfigurable (1) selon la revendication 24, **caractérisé en ce qu'**un septième multiplexeur (7206) permet la sélection des entrées des quatrième et cinquième registres (7207, 7208) via le registre de configuration (14), parmi la sortie dudit cinquième multiplexeur (7202), dudit sixième multiplexeur (7203) et de la sortie dudit opérateur de calcul (7204).

26. Dispositif de calcul reconfigurable (1) selon l'une quelconque des revendications 22 à 25, **caractérisé en ce que** chaque module de calcul configurable (620) comprend en outre un bloc logique de configuration (7211) générant en place du registre de configuration (14), les mots logiques de configuration des éléments constituant le module de calcul configurable (620), sur la base du registre de configuration (14), des deux valeurs d'entrée (c, d) du module de calcul configurable (620) et de la valeur de sortie de l'opérateur de calcul (7204).

27. Circuit intégré mettant en oeuvre un dispositif de calcul reconfigurable (1) selon l'une quelconque des revendications précédentes.

28. Circuit intégré mettant en oeuvre une pluralité de dispositifs de calcul reconfigurables (1) selon l'une quelconque des revendications précédentes, montés en parallèle.

## Patentansprüche

1. Umkonfigurierbare Rechenvorrichtung (1) zur Bildverarbeitung, die Folgendes umfasst:
• wenigstens eine Nachbarschaftsberechnungsmatrix (11) zum Erzeugen von Paarbildungsteilbewertungen zwischen Paaren von Pixeln, die von einer ersten Serie von Operationen resultieren, die über Daten konfigurierbar sind, die in einem Konfigurationsregister (14) enthalten sind,
**dadurch gekennzeichnet, dass** sie Folgendes umfasst:
• wenigstens einen flexiblen Reduktionsbaum (12), der an den Paarbildungsteilbewertungen eine zweite Serie von Operationen ausführt, die über das Konfigurationsregister (14) an Pixelnachbarschaften konfigurierbar sind, die über das Konfigurationsregister (14) konfigurierbar sind,
• wenigstens eine Analysematrix (13), die Berechnungen an Bewertungen durchführt, die über das Konfigurationsregister (14) an den vom flexiblen Reduktionsbaum (12) stammenden Ergebnissen konfigurierbar sind.

2. Umkonfigurierbare Rechenvorrichtung (1) nach Anspruch 1, **dadurch gekennzeichnet, dass** die Nachbarschaftsberechnungsmatrix (11) mit wenigstens zwei Speichern (110, 111) kommuniziert, einem ersten Speicher (110), der Informationen über Pixel eines ersten Bildes (I₁) enthält, und einem zweiten Speicher (111), der Informationen über Pixel eines zweiten Bildes (I₂) enthält.

3. Umkonfigurierbare Rechenvorrichtung (1) nach einem der vorherigen Ansprüche, **dadurch gekennzeichnet, dass** sie einen dritten Speicher (112) umfasst, der zum Speichern von einer Mehrzahl von Pixeln von einem der Bilder gemeinsamen Informationen ausgelegt ist und mit der Nachbarschaftsberechnungsmatrix (11) kommuniziert.

4. Umkonfigurierbare Rechenvorrichtung (1) nach einem der vorherigen Ansprüche, **dadurch gekennzeichnet, dass** ein vierter Speicher (130) zum Speichern von Zwischendaten ausgelegt ist, die von der Analysematrix (13) verwendet werden.

5. Umkonfigurierbare Rechenvorrichtung (1) nach einem der vorherigen Ansprüche, **dadurch gekennzeichnet, dass** die Ausgangsdaten der Analysematrix (13) an eine externe Vorrichtung über einen Datenbus (15) übermittelt werden können.

6. Umkonfigurierbare Rechenvorrichtung (1) nach einem der vorherigen Ansprüche, **dadurch gekennzeichnet, dass** die Ausgangsdaten der Analysematrix (13) neu an den Eingang zur Analysematrix (13) angelegt werden können.

7. Umkonfigurierbare Rechenvorrichtung (1) nach einem der vorherigen Ansprüche, **dadurch gekennzeichnet, dass** die Nachbarschaftsberechnungsmatrix (11) eine Mehrzahl M von Spalten (21) umfasst, wobei jede Spalte eine Mehrzahl N von Nachbarschaftsberechnungselementen (200) umfasst, wobei jedes Nachbarschaftsberechnungselement (200) an den Informationen über ein Paar von den zwei jeweiligen Bildern (I₁, I₂) kommenden Pixel Operationen ausführt, die über das Konfigurationsregister (14) konfigurierbar sind, das eine Paarbildungsteilbewertung erzeugt.

8. Umkonfigurierbare Rechenvorrichtung (1) nach Anspruch 7, **dadurch gekennzeichnet, dass** jedes Nachbarschaftsberechnungselement (200) zwei Datenregister (r0, r1) umfasst, die die in Verbreitung befindlichen Zwischendaten speichern.

9. Umkonfigurierbare Rechenvorrichtung (1) nach einem der Ansprüche 7 bis 8, **dadurch gekennzeichnet, dass** jedes Nachbarschaftsberechnungselement (200) eine Rechen- und Logikeinheit (320) mit zwei Eingängen (a, b) umfasst, die durch einen Auswahllogikblock (310) bestimmt werden, der über das Konfigurationsregister (14) zwei Daten aus den in den beiden Datenregistern (r0, r1) enthaltenen Daten auswählt, den Wert, der aus der im vorherigen Taktzyklus vom Nachbarschaftsberechnungselement (200) an derselben Reihe der nächsten Spalte (21) durchgeführten Berechnungen resultiert, und den Wert, der aus den im vorherigen Taktzyklus vom Nachbarschaftsberechnungselement (200) an derselben Reihe der vorherigen Spalte (21) durchgeführten Berechnungen resultiert.

10. Umkonfigurierbare Rechenvorrichtung (1) nach einem der Ansprüche 7 bis 9, **dadurch gekennzeichnet, dass** bei jedem Taktzyklus die im ersten Datenregister (r0) und im zweiten Datenregister (r1) eines Nachbarschaftsberechnungselements (200) einer gegebenen Spalte (21) enthaltenen Daten jeweils in das erste Datenregister (r0) und das zweite Datenregister (r1) des Nachbarschaftsberechnungselements derselben gegebenen Reihe in eine Spalte (21) vor oder hinter der gegebenen Spalte (21) mit einem ersten ganzen Schritt bewegt werden können, der über das Konfigurationsregister (14) mit einem bestimmten Höchstwert konfigurierbar ist, oder in das erste Datenregister (r0) und das zweite Datenregister (r1) des Nachbarschaftsberechnungselements der Reihe über oder unter der gegebenen Reihe mit einem zweiten ganzen Schritt, der über das Konfigurationsregister (14) mit einem bestimmten Höchstwert konfigurierbar ist.

11. Umkonfigurierbare Rechenvorrichtung (1) nach einem der Ansprüche 7 bis 10, **dadurch gekennzeichnet, dass** jede Spalte (21) mit einem Spaltenregister (R_{coln}) assoziiert ist, das Daten enthält, die allen Nachbarschaftsberechnungselementen (200) der Spalte (21) gemeinsam sind.

12. Umkonfigurierbare Rechenvorrichtung (1) nach Anspruch 11, **dadurch gekennzeichnet, dass** der Auswahllogikblock (310) ferner zum Auswählen der im Spaltenregister (Rcolₙ) enthaltenen Daten ausgelegt ist.

13. Umkonfigurierbare Rechenvorrichtung (1) nach einem der Ansprüche 9 bis 12, **dadurch gekennzeichnet, dass** die Rechen- und Logikeinheit (320) wenigstens ein erstes Niveau (3203) an Rechenoperatoren mit zwei Eingängen und einem Ausgang, ein zweites Niveau (3206) an Operatoren mit einem Eingang und einem Ausgang und ein drittes Niveau (3208) an Operatoren mit einem Eingang und einem Ausgang umfasst, wobei die an die Eingänge der Operatoren angelegten Daten, die im zweiten und dritten Niveau (3206, 3208) enthalten sind, von Multiplexern (3205, 3207) jeweils aus den Ausgängen der Operatoren des ersten Niveaus (3203) und des zweiten Niveaus (3206) über das Konfigurationsregister (14) ausgewählt werden, wobei die Daten, die an die beiden Eingänge der Operatoren des ersten Niveaus (3203) angelegt werden, die beiden Eingangsdaten (a, b) der Logik- und Recheneinheit (320) sind.

14. Umkonfigurierbare Rechenvorrichtung (1) nach Anspruch 13, **dadurch gekennzeichnet, dass** jeder der Rechenoperatoren des ersten Niveaus von Operatoren ein Multiplizierglied, ein Addierglied, ein Subtrahierglied und/oder Dividierglied ist.

15. Umkonfigurierbare Rechenvorrichtung (1) nach Anspruch 13, **dadurch gekennzeichnet, dass** jeder der Rechenoperatoren des ersten Niveaus von Operatoren ein Multiplizierglied, ein Summierglied, ein Subtrahierglied, ein Dividierglied und/oder ein Zähloperator (3204) mit einem Vergleichsoperator (32041) ist, der die beiden Eingänge des Operators vergleicht, dessen boolescher Ausgang ein Zählregister (32042) ansteuert, wobei das Zählregister (32042) und der Ausgang des Vergleichsoperators (32041) die Eingänge eines Zähllogik-Rechenoperators (32043) ansteuern, wobei die Konfigurationen des Zählregisters (32042), des Vergleichsoperators (32041) und des Zähllogik-Rechenoperators (32043) durch ein im Konfigurationsregister (14) enthaltenes Konfigurationswort vorgegeben werden.

16. Umkonfigurierbare Rechenvorrichtung (1) nach einem der Ansprüche 13 bis 15, **dadurch gekennzeichnet, dass** die Rechen- und Logikeinheit (320) ferner ein erstes Register (3201) zum Speichern des Wertes des ersten Eingangs (a) bei einem gegebenen Taktzyklus umfasst, wobei ein erster Multiplexer (3202) die Auswahl des ersten Eingangs oder des im ersten Register (3201) gespeicherten Wertes zum Ansteuern eines Eingangs von jedem der Rechenoperatoren des ersten Niveaus von Operatoren (3203) zulässt.

17. Umkonfigurierbare Rechenvorrichtung (1) nach einem der Ansprüche 9 bis 16, **dadurch gekennzeichnet, dass** die Rechen- und Logikeinheit (320) ferner ein zweites Register (3210) am Ausgang des Nachbarschaftsberechnungselements (200) zum Validieren oder Invalidieren des an einem gegebenen Taktzyklus erhaltenen Ergebnisses in Abhängigkeit von einem im Konfigurationsregister (14) vorliegenden Konfigurationsbit umfasst.

18. Umkonfigurierbare Rechenvorrichtung (1) nach einem der vorherigen Ansprüche, **dadurch gekennzeichnet, dass** der flexible Reduktionsbaum (12) eine erste Stufe (420) von flexiblen Reduktionsnetzen (410) und eine zweite Stufe (430) von flexiblen Reduktionsnetzen umfasst, wobei die erste Stufe M flexible Reduktionsnetze (410) mit N Eingängen und einer Anzahl K von Ausgängen umfasst und die zweite Stufe (430) K flexible Reduktionsnetze (410) mit M Eingängen und einer Anzahl F von Ausgängen umfasst, wobei K der Höchstzahl von gleichzeitigen Fenstern in einer Spalte und F der Höchstzahl von gleichzeitigen Fenstern in einer Reihe entspricht.

19. Umkonfigurierbare Rechenvorrichtung (1) nach Anspruch 18, **dadurch gekennzeichnet, dass** jedes flexible Reduktionsnetz (410) mehrere Stufen (411, 412, 413) von Addierblöcken (4110) umfasst, wobei die Eingänge der Addierblöcke (4110) der ersten Stufe (411) die Eingänge des flexiblen Reduktionsnetzes (410) sind und die Eingänge der Addierblöcke (4110) einer konsekutiven Stufe (412) von den Ausgängen der Addierblöcke (4110) der vorherigen Stufe (411) angesteuert werden.

20. Umkonfigurierbare Rechenvorrichtung (1) nach Anspruch 19, **dadurch gekennzeichnet, dass** es drei Stufen von Addierblöcken gibt und jeder Addierblock (4110) drei Eingänge hat.

21. Umkonfigurierbare Rechenvorrichtung (1) nach einem der Ansprüche 18 bis 20, **dadurch gekennzeichnet, dass** die Eingänge der Addierblöcke (4110) gesperrt werden können, wobei die Auswahl der gesperrten Eingänge über das Konfigurationsregister (14) erfolgt.

22. Umkonfigurierbare Rechenvorrichtung (1) nach einem der vorherigen Ansprüche, **dadurch gekennzeichnet, dass** die Analysematrix (13) eine Mehrzahl L von Spalten (600) umfasst, wobei jede Spalte (600) eine Mehrzahl W von konfigurierbaren Rechenmodulen (620) mit zwei Eingängen (c, d) und zwei Ausgängen (e, f) zum Ausführen von Rechen- und/oder Kombinationsoperationen umfasst, die über das Konfigurationsregister (14) vorgegeben werden, wobei die Eingänge der konfigurierbaren Rechenmodule (620) der ersten Spalte (600) von den Ausgängen des flexiblen Reduktionsbaums (12) nach dem Umleiten über ein stromaufwärts von der ersten Spalte (600) befindliches flexibles Verbindungsnetz (610) angesteuert werden, wobei die Umleitung über das Konfigurationsregister (14) vorgegeben wird, und wobei die von den konfigurierbaren Rechenmodulen (620) einer gegebenen Spalte (600) ausgeführten Operationen, nach dem Umleiten über ein stromaufwärts von der ersten Spalte (600) befindliches flexibles Verbindungsnetz (610) an die Eingänge der konfigurierbaren Rechenmodule (620) der nachfolgenden Spalte angelegt werden, wobei die Umleitung über das Konfigurationsregister (14) vorgegeben wird.

23. Umkonfigurierbare Rechenvorrichtung (1) nach Anspruch 22, **dadurch gekennzeichnet, dass** jedes konfigurierbare Rechenmodul (620) Folgendes umfasst: wenigstens einen Rechenoperator (7204) mit zwei Eingängen und einem Ausgang, konfigurierbar über das Konfigurationsregister (14), ein drittes Register (7201), das einen über das Konfigurationsregister (14) vorgegebenen bestimmten Wert speichert, ein Loopback-Register (7205) zum Neuanlegen eines Ergebnisses vom Rechenoperator (7204) an einen seiner Eingänge, ein viertes Register (7207) und ein fünftes Register (7208) zum Validieren oder Invalidieren der von dem umkonfigurierbaren Rechenmodul (620) erzeugten Ergebnisse in Abhängigkeit von den Eingangswerten (c, d), dem Ausgang vom Rechenoperator (7204) und/oder vom Konfigurationsregister (14).

24. Umkonfigurierbare Rechenvorrichtung (1) nach Anspruch 23, **dadurch gekennzeichnet, dass** der Rechenoperator (7204) an seinem ersten Eingang einen Wert empfängt, der von einem fünften Multiplexer (7202) über das Konfigurationsregister (14) zwischen dem ersten Eingangswert (c) des konfigurierbaren Rechenmoduls (620) und dem im Schleifenverbindungsregister (7205) gespeicherten Wert ausgewählt ist, und an seinem zweiten Eingang einen Wert empfängt, der von einem sechsten Multiplexer (7203) über das Konfigurationsregister (14) zwischen dem zweiten Eingangswert (d) des konfigurierbaren Rechenmoduls (620) und dem im dritten Register (7201) gespeicherten Wert ausgewählt ist.

25. Umkonfigurierbare Rechenvorrichtung (1) nach Anspruch 24, **dadurch gekennzeichnet, dass** ein siebter Multiplexer (7206) die Auswahl der Eingänge des vierten und fünften Registers (7207, 7208) über das Konfigurationsregister (14) vom Ausgang des fünften Multiplexers (7202), des sechsten Multiplexers (7203) und vom Ausgang des Rechenoperators (7204) zulässt.

26. Umkonfigurierbare Rechenvorrichtung (1) nach einem der Ansprüche 22 bis 25, **dadurch gekennzeichnet, dass** jedes konfigurierbare Rechenmodul (620) ferner einen Konfigurationslogikblock (7211) umfasst, der anstelle des Konfigurationsregisters (14) die Konfigurationslogikwörter der das konfigurierbare Rechenmodul (620) bildenden Elemente auf der Basis des Konfigurationsregisters (14), der beiden Eingangswerte (c, d) des konfigurierbaren Rechenmoduls (620) und des Ausgangswertes des Rechenoperators (7204) erzeugt.

27. Integrierte Schaltung, die eine umkonfigurierbare Rechenvorrichtung (1) nach einem der vorherigen Ansprüche implementiert.

28. Integrierte Schaltung, die mehrere umkonfigurierbare Rechenvorrichtungen (1) nach einem der vorherigen Ansprüche parallel geschaltet implementiert.

## Claims

1. A reconfigurable computation device (1) for image processing comprising:
• at least one neighbourhood computation matrix (11) generating pairing sub-scores between pairs of pixels resulting from a first series of operations configurable via data contained in a configuration register (14),
**characterised in that** it comprises:
• at least one flexible reduction tree (12) that carries out, on the pairing sub-scores, a second series of operations configurable via said configuration register (14) on neighbourhoods of pixels configurable via said configuration register (14),
• at least one analysis matrix (13) that carries out computations of scores configurable via said configuration register (14) on the results originating from said flexible reduction tree (12).

2. The reconfigurable computation device (1) according to claim 1, **characterised in that** said neighbourhood computation matrix (11) communicates with at least two memories (110, 111), a first memory (110) containing information relating to pixels of a first image (I₁) and a second memory (111) containing information relating to pixels of a second image (I₂).

3. The reconfigurable computation device (1) according to any one of the preceding claims, **characterised in that** it comprises a third memory (112) that is designed to store information common to a plurality of pixels of one of the images and communicating with said neighbourhood computation matrix (11).

4. The reconfigurable computation device (1) according to any one of the preceding claims, **characterised in that** a fourth memory (130) is designed to store intermediate data used by said analysis matrix (13).

5. The reconfigurable computation device (1) according to any one of the preceding claims, **characterised in that** the output data of said analysis matrix (13) is designed to be communicated to an external device via a data bus (15).

6. The reconfigurable computation device (1) according to any one of the preceding claims, **characterised in that** the output data of said analysis matrix (13) is designed to be reintroduced as input into said analysis matrix (13).

7. The reconfigurable computation device (1) according to any one of the preceding claims, **characterised in that** said neighbourhood computation matrix (11) comprises a plurality M of columns (21), each column comprising a plurality N of neighbourhood computation elements (200), each neighbourhood computation element (200) carrying out, based on the information relating to a pair of pixels originating from the two respective images (I₁, I₂), operations configurable via said configuration register (14) producing a pairing sub-score.

8. The reconfigurable computation device (1) according to claim 7, **characterised in that** each neighbourhood computation element (200) comprises two data registers (r0, r1) storing the intermediate data currently being processed.

9. The reconfigurable computation device (1) according to any one of claims 7 to 8, **characterised in that** each neighbourhood computation element (200) comprises an arithmetic and logic unit (320) with two inputs (a, b) determined by a selection logic block (310) selecting, via said configuration register (14), two items of data from among the data contained in said two data registers (r0, r1), the value resulting from the computations carried out during the preceding clock cycle by said neighbourhood computation element (200) on the same row as the next column (21) and the value resulting from the computations carried out during the preceding clock cycle by the neighbourhood computation element (200) on the same row as the preceding column (21).

10. The reconfigurable computation device (1) according to any one of claims 7 to 9, **characterised in that**, during each clock cycle, the data that is included in said first data register (r0) and said second data register (r1) of a neighbourhood computation element (200) of a given column (21) can respectively move into said first data register (r0) and said second data register (r1) of the neighbourhood computation element of the same given row and into a column (21) before or after said given column (21) by a first whole step configurable via said configuration register (14) with a maximum determined value, or into said first data register (r0) and said second data register (r1) of the neighbourhood computation element of the row above or below said given row by a second whole step configurable via said configuration register (14) with a maximum determined value.

11. The reconfigurable computation device (1) according to any one of claims 7 to 10, **characterised in that** each column (21) is associated with a column register (Rcolₙ) containing data common to all of the neighbourhood computation elements (200) of the column (21).

12. The reconfigurable computation device (1) according to claim 11, **characterised in that** said selection logic block (310) is further designed to select the data included in said column register (Rcolₙ).

13. The reconfigurable computation device (1) according to any one of claims 9 to 12, **characterised in that** said arithmetic and logic unit (320) comprises at least one first level (3203) of arithmetic operators with two inputs and one output, one second level (3206) of operators with one input and one output and one third level (3208) of operators with one input and one output, the data that is applied to the inputs of the operators included in the second and third levels (3206, 3208) being selected by multiplexers (3205, 3207) respectively from among the outputs of the operators of the first level (3203) and the second level (3206) via said configuration register (14), the data that is applied to the two inputs of the operators of said first level (3203) being the two input data (a, b) of said logic and arithmetic unit (320).

14. The reconfigurable computation device (1) according to claim 13, **characterised in that** each of the arithmetic operators of said first level of operators is a multiplier, an adder, a subtracter and/or a divider.

15. The reconfigurable computation device (1) according to claim 13, **characterised in that** each of the arithmetic operators of said first level of operators is a multiplier, an adder, a subtracter, a divider and/or a census operator (3204) comprising a comparison operator (32041) comparing the two inputs of the operator, the Boolean output of which drives a census register (32042), said census register (32042) and the output of said comparison operator (32041) driving the inputs of a census logic computation operator (32043), the configurations of said census register (32042), said comparison operator (32041) and said census logic computation operator (32043) being specified by a configuration word that is contained in said configuration register (14).

16. The reconfigurable computation device (1) according to any one of claims 13 to 15, **characterised in that** said arithmetic and logic unit (320) further comprises a first register (3201) designed to store the value of the first input (a) at a given clock cycle, a first multiplexer (3202) allowing the selection of the first input or of the value stored in said first register (3201) for driving one input of each of the arithmetic operators of said first level of operators (3203).

17. The reconfigurable computation device (1) according to any one of claims 9 to 16, **characterised in that** said arithmetic and logic unit (320) further comprises a second register (3210) at the output of said neighbourhood computation element (200) designed to validate or invalidate the result obtained at a given clock cycle as a function of a configuration bit present in said configuration register (14).

18. The reconfigurable computation device (1) according to any one of the preceding claims, **characterised in that** said flexible reduction tree (12) comprises a first stage (420) of flexible reduction networks (410) and a second stage (430) of flexible reduction networks, said first stage comprising M flexible reduction networks (410) with N inputs and a number K of outputs and said second stage (430) comprising K flexible reduction networks (410) with M inputs and a number F of outputs, K corresponding to the maximum number of simultaneous windows on a column and F to the maximum number of simultaneous windows on a line.

19. The reconfigurable computation device (1) according to claim 18, **characterised in that** each flexible reduction network (410) comprises a plurality of stages (411, 412, 413) of adder blocks (4110), the inputs of the adder blocks (4110) of the first stage (411) being the inputs of the flexible reduction network (410), and the inputs of the adder blocks (4110) of a consecutive stage (412) being driven by the outputs of the adder blocks (4110) of the preceding stage (411).

20. The reconfigurable computation device (1) according to claim 19, **characterised in that** there are three stages of adder blocks, and each adder block (4110) has three inputs.

21. The reconfigurable computation device (1) according to any one of claims 18 to 20, **characterised in that** the inputs of the adder blocks (4110) can be inhibited, the selection of the inhibited inputs being carried out via said configuration register (14).

22. The reconfigurable computation device (1) according to any one of the preceding claims, **characterised in that** said analysis matrix (13) comprises a plurality L of columns (600), each column (600) comprising a plurality W of configurable computation modules (620) with two inputs (c, d) and two outputs (e, f) that are designed to carry out arithmetic and/or combining operations specified via said configuration register (14), the inputs of the configurable computation modules (620) of the first column (600) being driven by the outputs of the flexible reduction tree (12) after redirection via a flexible interconnection network (610) disposed upstream of the first column (600), the redirection being specified via said configuration register (14), and the results from the operations carried out by the configurable computation modules (620) of a given column (600) being applied to the inputs of the configurable computation modules (620) of the consecutive column, after redirection via a flexible interconnection network (610) disposed upstream of the first column (600), the redirection being specified via said configuration register (14).

23. The reconfigurable computation device (1) according to claim 22, **characterised in that** each configurable computation module (620) comprises at least one computation operator (7204) with two inputs and one output, configurable via said configuration register (14), a third register (7201) storing a determined value specified via said configuration register (14), a loop connection register (7205) that is designed to reinject a result from the computation operator (7204) into one of its inputs, a fourth register (7207) and a fifth register (7208) designed to validate or invalidate the results generated by said configurable computation module (620) as a function of the input values (c, d), the output from the computation operator (7204) and/or said configuration register (14).

24. The reconfigurable computation device (1) according to claim 23, **characterised in that** said computation operator (7204) receives on its first input a value selected by a fifth multiplexer (7202) via said configuration register (14) between the first input value (c) of said configurable computation module (620) and the value stored in said loop connection register (7205), and on its second input a value selected by a sixth multiplexer (7203) via said configuration register (14) between the second input value (d) of said configurable computation module (620) and the value stored in the third register (7201).

25. The reconfigurable computation device (1) according to claim 24, **characterised in that** a seventh multiplexer (7206) allows the selection of the inputs of the fourth and fifth registers (7207, 7208) via said configuration register (14) from among the output of said fifth multiplexer (7202), said sixth multiplexer (7203) and the output of said computation operator (7204).

26. The reconfigurable computation device (1) according to any one of claims 22 to 25, **characterised in that** each configurable computation module (620) further comprises a configuration logic block (7211) generating, in place of said configuration register (14), the configuration logic words of the elements that constitute said configurable computation module (620) on the basis of said configuration register (14), the two input values (c, d) of said configurable computation module (620) and the output value of the computation operator (7204).

27. An integrated circuit implementing a reconfigurable computation device (1) according to any one of the preceding claims.

28. The integrated circuit implementing a plurality of reconfigurable computation devices (1) according to any one of the preceding claims, mounted in parallel.
